# EUROPÄISCHE PATENTSCHRIFT

(11) **EP 2 289 783 B1**
(45) Veröffentlichungstag und Bekanntmachung des Hinweises auf die Patenterteilung: **14.03.2012**
(21) Anmeldenummer: 10008972.1
(22) Anmeldetag: 30.08.2010
(51) Int. Cl.: B62J 9/00, B62J 11/00

(54) **Adapter zum Anbringen von Gegenständen am Tank eines Motorrades**
Adapter for attaching objects to the tank of a motorcycle
Adaptateur pour l'application d'objets sur le réservoir d'une motocyclette

(30) Priorität: 28.08.2009 DE 102009039017; 10.11.2009 DE 102009052403
(43) Veröffentlichungstag der Anmeldung: 02.03.2011
(73) Patentinhaber: SW-Motech GmbH & Co. KG, 35282 Rauschenberg (DE)
(72) Erfinder: Swora, Jürgen, 35282 Rauschenberg (DE); Rhiel, Fabian, 35274 Kirchhain (DE)
(74) Vertreter: Buchhold, Jürgen

(56) Entgegenhaltungen:
- DE-U1-202005 005 470
- US-A1- 2004 031 833

## Beschreibung

Die Erfindung betrifft einen Adapter zum Anbringen von Gegenständen am Tank eines Motorrades gemäß dem Oberbegriff von Anspruch 1.

Bei Motorrädern sind üblicherweise sowohl der Stauraum, der zum Mitführen von Gegenständen genutzt werden kann, als auch die Möglichkeit, während der Fahrt benötigte Geräte wie beispielsweise Navigationsgeräte o.ä. in Reichweite des Fahrers zu befestigen, beschränkt. Man hat daher Befestigungsvorrichtungen entwickelt, die das Anbringen von Gegenständen auf dem Tank eines Motorrades ermöglichen.

DE 20 2005 005 470 U1 sieht dazu einen zweiteiligen Adapter vor. Dieser besteht aus einem am Motorrad befestigbaren Unterteil und einem in das Unterteil einhängbaren und mit dem zu befestigenden Gegenstand koppelbaren Oberteil. Das Unterteil hat die Form eines Hufeisens und wird am Tankring befestigt. An den offenen Enden des Hufeisens sind Lagernasen ausgebildet in welche das Oberteil mit Hilfe einer krallenförmigen Einhakvorrichtung eingebängt wird. Die Einhakvorrichtung kann die Lagernasen gelenkartig umgreifen.

Zum Anbringen des Oberteils am Unterteil muss eine zweistufige Bewegung ausgeführt werden. Dabei wird das Oberteil in einem ersten Schritt in einem gewissen Winkel zum Unterteil in die Lagernasen eingehängt. In einem zweiten Schritt wird das Oberteil dann durch eine Kippbewegung auf das Unterteil geklappt. Dabei greift eine an der Stirnseite des Oberteils ausgebildete Schnapprast in eine an der Stirnseite des Unterteils ausgebildete Bohrung ein, so dass das Oberteil und das Unterteil mit einander verrastet und mithin in gefügter Position gesichert sind.

Von Nachteil hierbei ist, dass eine nicht unerhebliche Bauhöhe des Unterteils notwendig ist, damit die Lagernasen ausreichend stabil sind und gleichzeitig vom Oberteil gut umgriffen werden können. Außerdem ist das Anbringen des mit dem Gegenstand gekoppelten Oberteils am Unterteil mit Nachteilen behaftet. Beispielsweise erfordert die zweistufige Montage-Bewegung stets einen gewissen Freiraum zwischen Gegenstand und Tank in den Bereichen, in denen der Gegenstand in Kipprichtung über den Tankring hinausragt. Der Gegenstand und der Tank können hier beim Aufsetzen des Oberteils kollidieren, was das Einhaken des Oberteils unmöglich macht oder zu Beschädigungen am Tank führen kann. Ein Freiraum zwischen dem Gegenstand und dem Tank wird zudem optisch als störend empfunden, insbesondere dann wenn es sich bei dem Gegenstand um eine Gepäcktasche oder einen Tankrucksack handelt.

Von Nachteil ist ferner, dass der Gegenstand die Sicht auf das Unterteil versperren kann, wodurch das Einhängen des Oberteils in die beidseitig ausgebildeten Lagernasen des Unterteils blind erfolgen muss. Dies birgt die Gefahr eines Verkantens oder unvollständigen Einhakens. Ebenso können Schäden am Tank entstehen, insbesondere dann, wenn man mit dem Oberteil versehentlich über den Tank kratzt.

Aufgabe der Erfindung ist es, einen verbesserten Adapter zum Anbringen von Gegenständen am Tank eines Motorrades bereitzustellen, der die Nachteile im Stand der Technik überwindet. Der Adapter soll insbesondere das Aufsetzten des zu transportierenden Gegenstandes erleichtern, wobei Beschädigungen am Tank vermieden werden sollen. Angestrebt wird ferner, dass der Adapter kostengünstig herstellbar und leicht zu handhaben ist. Nach dem Fügen des Adapters soll der Gegenstand stets sicher und zuverlässig am Tank befestigt sein.

Hauptmerkmale der Erfindung sind im kennzeichnenden Teil von Anspruch 1 angegeben. Ausgestaltungen sind Gegenstand der Ansprüche 2 bis 15.

Bei einem Adapter zum Anbringen von Gegenständen am Tank eines Motorrades, bestehend aus einem mit dem Tank des Motorrades verbindbaren Unterteil und einem mit dem anzubringenden Gegenstand koppelbaren Oberteil, wobei das Oberteil und das Unterteil in lösbarer Weise an- und/oder ineinanderfügbar sowie in gefügter Position sicherbar sind, wobei das Oberteil eine Schnappvorrichtung aufweist, die in gefügter Position mit dem Unterteil in Eingriff steht, sieht die Erfindung vor, dass in dem Oberteil zwei Schappvorrichtungen ausgebildet sind, die gegenüberliegend angeordnet und gegenläufig zueinander bewegbar sind, wobei jede Schnappvorrichtung wenigstens ein Rastelement aufweist, und wobei die Rastelemente beim Aufsetzen des Oberteils auf das Unterteil in einer Richtung senkrecht zur Fügerichtung voneinander wegbewegt werden und in gefügter Position das Unterteil hinter- oder untergreifen.

Besonders vorteilhaft bei dieser erfindungsgemäßen Lösung ist, dass in dem Oberteil zwei gegenüberliegende Schnappvorrichtungen ausgebildet sind, die senkrecht zur Fügerichtung gegenläufig zueinander bewegbar sind. Wird nämlich das Oberteil eines solchen Adapters auf das am Tank montierte Unterteil gesetzt, so trifft das Unterteil zunächst auf die Schnappvorrichtungen, die das Fügen des Unterteils in das Oberteil versperren. Wird dann jedoch auf das Oberteil ein definierter Druck in Richtung der Fügerichtung ausgeübt, so weichen die Schnappvorrichtungen, insbesondere deren Rastelemente in der senkrecht zur Fügerichtung verlaufenden Richtung zurück. Das Unterteil gelangt an den Rastelement vorbei, und wird in das Oberteil gefügt. Dabei kann es beispielsweise in das Oberteil aufgenommen werden.

Sobald das Unterteil an den Rastelementen der Schnappvorrichtungen vorbei in das Oberteil hinein gelangt ist, schnappen die Schnappvorrichtungen samt Rastelementen wieder zurück in die Ausgangsposition. Dabei kommen die Rastelemente der Schnappvorrichtungen hinter dem Unterteil zu liegen, so dass sie das Unterteil in gefügter Position hinter- bzw. untergreifen. Das Abnehmen des Oberteils ist dann nicht mehr möglich. Wird nämlich nun beispielsweise entgegen der Fügerichtung an dem Oberteil gezogen, so werden die Rastelemente der Schnappvorrichtungen gegen das in das Oberteil gefügte Unterteil gepresst und umgekehrt.

Man erkennt, dass die erfindungsgemäße Lösung es ermöglicht, das Oberteil des Adapters in einer einzigen linearen Bewegung auf dem Unterteil zu montieren. Dazu wird das Oberteil lediglich mit leichtem Druck in Fügerichtung auf das Unterteil aufgesetzt, wodurch der von den Schnappvorrichtungen gebildete Schnappmechanismus ausgelöst wird und das Unterteil hintergreift. Oberteil und Unterteil sind miteinander verrastet. Somit wird das Oberteil auf dem Unterteil in einem einzigen Bewegungsschritt aufgesetzt und verrastet. Schwenk-, Kipp- oder Drehbewegungen sind nicht mehr erforderliche. Beschädigungen am Tank werden wirksam vermieden.

Vorteilhaft ist es bei der erfindungsgemäßen Lösung ferner, wenn die Rastelemente beim Aufsetzen des Oberteils auf das Unterteil in einander gegenläufigen Richtungen senkrecht zur Fügerichtung voneinander wegbewegt werden und in gefügter Position das Unterteil symmetrisch hinter- oder untergreifen. Das Unterteil wird dadurch gleichmäßig in dem Oberteil gesichert, welches dadurch stets zuverlässig am Tank gesichert ist. Letzteres ist insbesondere bei höheren Geschwindigkeiten wichtig. Selbst größere an dem Gegenstand angreifende Kräfte können die Rastverbindung nicht lösen.

Weitere Vorteile ergeben sich, wenn jede Schnappvorrichtung einen Schieber umfasst, in oder an dem die Rastelemente angeordnet sind. Mit Hilfe der Schieber können die Rastelemente in der senkrecht zur Fügerichtung verlaufenden Richtung bewegt werden. Dabei ist es zweckmäßig, wenn die Schieber der Schnappvorrichtungen in einer ersten Richtung und einer zweiten Richtung, die der ersten Richtung entgegengesetzt ist, gegenläufig zueinander bewegbar sind.

Um eine kontrollierte und synchrone Bewegung der Schnappvorrichtungen zu ermöglichen, ist es vorteilhaft, wenn die Schieber über wenigstens ein Kopplungsglied derart miteinander gekoppelt sind, dass durch eine Bewegung des ersten Schiebers in der erste Richtung der zweite Schieber in der zweite Richtung und umgekehrt bewegbar ist.

In einer ersten Ausführungsvariante sind die Rastelemente separat von den Schiebern ausgebildet, wobei letztere mit Ausnehmungen versehen sind, welche die Rastelemente aufnehmen. In einer zweiten Ausführungsvariante sind die Rastelemente mit den Schiebern einstückig ausgebildet.

In einer weiteren wichtigen Ausführungsvariante sind die Rastelemente mit den Schiebern einstückig ausgebildet, was den Schnappvorrichtungen eine hohe Stabilität verleiht. Bei Bedarf können die Rastelemente aber auch separat ausgebildet und fest mit den Schiebern verbunden sein, beispielweise durch verkleben oder verschweißen. Letzteres hat den Vorteil, dass man die Rastelemente und die Schieber aus unterschiedlichen Materialen fertigen kann.

Um zu vermeiden, dass sich die Schnappvorrichtungen unkontrolliert selbständig bewegen - wobei sich versehentlich und ungewollt das Oberteil vom Unterteil lösen könnte - ist es vorteilhaft, wenn die Schnappvorrichtungen mit einer permanenten Kraft beaufschlagt sind. Die permanente Kraft hält die Schnappvorrichtungen in einer Rastposition, in der die Rastelemente das eingesetzte Unterteil hintergreifen. Mit Vorteil wird die permanente Kraft von einer Feder erzeugt, aber auch andere Lösungen denkbar, beispielsweise Magnete.

Um ein ungewolltes Abnehmen des Oberteils von dem Unterteil durch Unbefugte zu verhindern, ist es zweckmäßig, wenn der Adapter eine Sicherungsvorrichtung aufweist. Diese kann beispielsweise in Form eines Sicherungsbolzens oder Schließbolzens ausgebildet sein. Ist der zu transportierende Gegenstand beispielsweise ein Tankrucksack, so kann der Sicherungsbolzen bzw. Schließbolzen von der Innenseite des Tankrucksacks durch den Boden der Tasche geführt werden, an dem das Oberteil befestigt ist. Dazu ist zweckmäßig im Oberteil eine Ausnehmung vorgesehen. Der Bolzen blockiert dann vorteilhafterweise das Kopplungsglied. Mithin ist auch eine Bewegung der Schieber und/oder der Rastelemente nicht mehr möglich. Die Rastelemente halten das Unterteil daher so lange fest, bis der Sicherungsbolzen entfernt wird und die Rastelemente mit Hilfe eines Lösemechanismus entgegen der permanenten Kraft in einer Richtung senkrecht zur Fügerichtung bewegt werden.

Man erkennt, dass die Bewegung der Schnappvorrichtungen mit einem Bolzen blockierbar ist. Außerdem erkennt man, dass die federbelasteten Schnappvorrichtungen und das Kopplungsglied einen Schnappmechanismus bilden, der das Oberteil an dem Unterteil sichert.

Um ein unbefugtes Eingreifen in den Schnappmechanismus zu verhindern, ist es vorteilhaft, dass der Schnappmechanismus in einem geschlossenen oder verschließbaren Gehäuse angeordnet ist. Dadurch ist es möglich, die Bauteile des Schnappmechanismus in dem Gehäuse durch einfaches ineinanderstecken zusammenzusetzen und lediglich durch das Aufsetzen eines Deckels mit dessen Hilfe das Gehäuse verschlossen wird zu sichern. Dadurch werden Montageschrauben überflüssig, welche die schwenk- und drehbaren Bauteile in den Schwenk-bzw. Drehgelenken festhalten. Dies verringert wiederum die Gefahr, dass der Schnappmechanismus aufgrund einer zu leicht oder zu stark angezogenen Schraube oder eines anderen nicht korrekt angebrachten Montageelementes nicht funktioniert. Überdies werden die Herstellkosten deutlich gesenkt, weil die Zahl der Bauteile für das Unterteil auf ein Minimum reduziert ist.

Ebenfalls vorteilhaft ist es, wenn der Adapter eine Verdrehsicherung aufweist, die das Verdrehen des Oberteils gegenüber dem Unterteil verhindert, wobei die Verdrehsicherung aus einer am Unterteil oder am Oberteil ausgebildeten Ausnehmung und einem am Oberteil oder am Unterteil ausgebildeter Vorsprung besteht, wobei der Vorsprung im montierten Zustand in die Ausnehmung eingreift.

Die Verdrehsicherung kann ferner so ausgebildet sein, dass sie das Oberteil beim Aufsetzen in die korrekte Position zum Unterteil bringt. Dazu können beispielsweise seitlich der Vorsprünge Einlaufschrägen oder ähnliche Führungselemente vorgesehen sein. Dies hat den Vorteil, dass das Oberteil auch dann korrekt auf das Unterteil aufgesetzt werden kann, wenn der zu transportierende Gegenstand so groß ist, dass man das Unterteil beim Aufsetzen des Oberteils nicht sehen kann.

Günstig ist es auch, wenn das Unterteil einen Rastrand aufweist. Dieser stellt dann eine definierte Fläche dar, die von den Rastelementen hintergriffen wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Explosionszeichnung einer ersten Ausführungsvariante eines erfindungsgemäßen Adapters;
- Fig. 2: die dem Tank zugewandte Seite des Oberteils des Adapters aus Fig. 1;
- Fig. 3: dem Tank zugewandte Seite des Oberteils aus Fig. 3 mit eingesetztem Unterteil;
- Fig. 4: Blick auf das Oberteil des Adapters mit abgenommenem Deckel;
- Fig. 5: den in das Oberteil eingesetzten Schnappmechanismus der Ausführungsvariante der Fig. 1 bis 4;
- Fig. 6a: das Unterteil eines erfindungsgemäßen Adapters;
- Fig. 6b: Aufsicht auf das Unterteil aus Fig. 6a;
- Fig. 7: Anbringen eines Oberteils des erfindungsgemäßen Adapters an einen Tank;
- Fig. 8a: eine weitere Ausführungsvariante des erfindungsgemäßen Schnappmechanismus mit verrastetem Ober- und Unterteil;
- Fig. 8b: Ausführungsvariante aus Fig. 8a aus einer Ansicht von schräg unten;
- Fig. 8c: Ausführungsvariante aus Fig. 8b ohne das eingesetzte Unterteil;
- Fig. 9: Explosionszeichnung des Schnappmechanismus der Ausführungsvariante der Figuren 8a bis 8c;
- Fig. 10a: Oberteil der Ausführungsvariante der Figuren 8a bis 9 mit geschlossenem Schnappmechanismus;
- Fig. 10b: Oberteil aus Fig. 10a mit geöffnetem Schnappmechanismus.
- Fig. 11: Eine Explosionsdarstellung eines erfindungsgemäßen Adapters;
- Fig. 12: die dem Tank zugewandte Seite des Oberteils des Adapters von Fig. 1;
- Fig. 13: die dem Tank zugewandte Seite des Oberteils von Fig. 1 mit eingesetztem Unterteil in verrasteter Stellung;
- Fig. 14: eine Draufsicht auf das Oberteil von Fig. 1 mit aufgesetztem Deckel;
- Fig. 15: den in das Oberteil von Fig. 1 eingesetzten Schnappmechanismus.
- Fig. 16a: das Unterteil eines erfindungsgemäßen Adapters und
- Fig. 16b: eine Draufsicht auf das Unterteil von Fig. 6a.

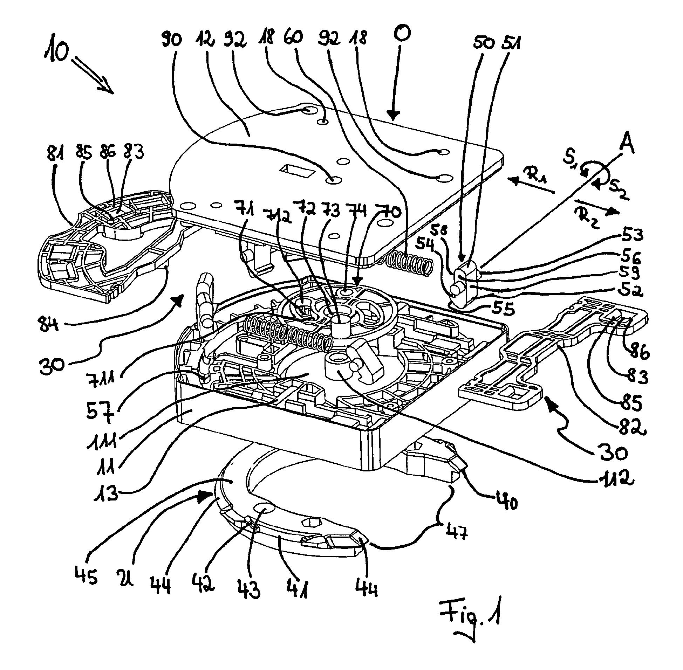

In Fig. 1 erkennt man eine erste bevorzugte Ausführungsvariante des erfindungsgemäßen Adapters 10. Dieser besteht aus einem Oberteil O und einem Unterteil U. In dem Oberteil O ist ein Schnappmechanismus ausgebildet, mit dessen Hilfe das Unterteil U in dem Oberteil O festlegbar ist.

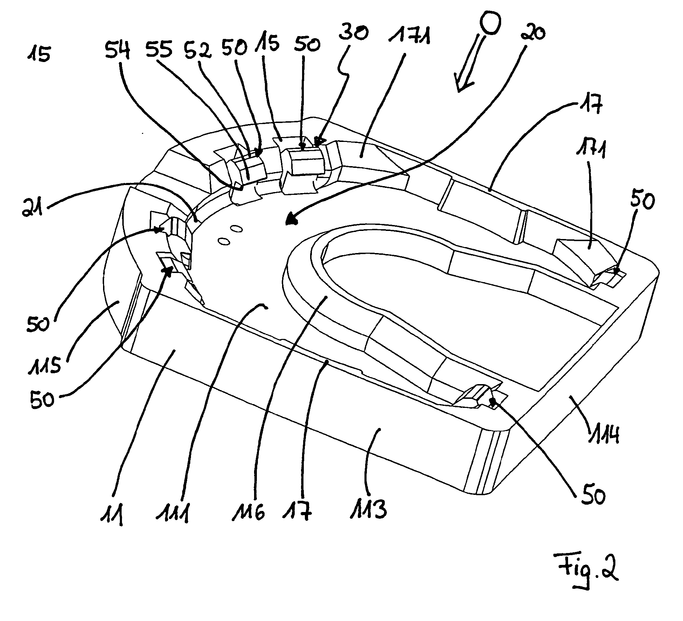

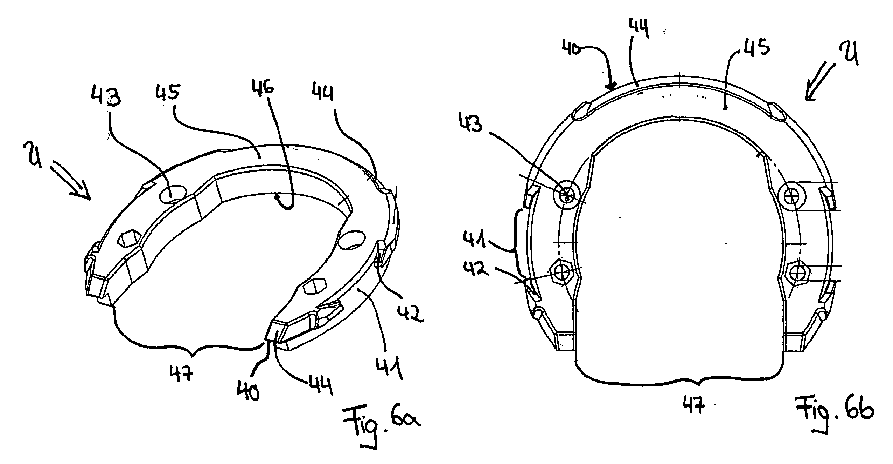

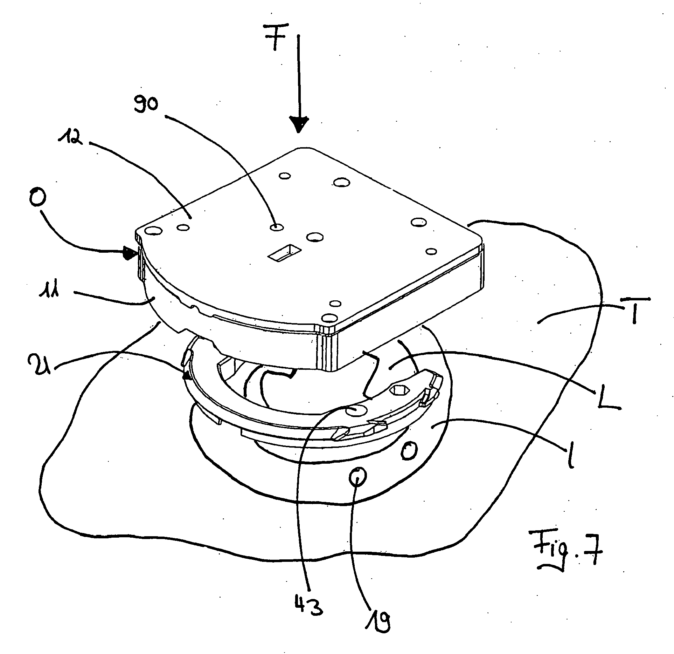

Das Unterteil U ist im Wesentlichen hufeisenförmig und hat mehrere Bohrungen 43, die zur Befestigung am Tank des Motorrades dienen (vgl. auch Figuren 6a, 6b und 7). Zum Festlegen des Unterteils U im Oberteil O ist ein an der Außenseite des Hufeisens umlaufender Rastrand 40 vorgesehen. Dieser wird seitlich von zwei Ausnehmungen 41 unterbrochen, die als Verdrehsicherung dienen (vgl. auch Figuren 2, 3 und 8a, für eine detaillierte Beschreibung des Unterteils siehe Beschreibung zu Fig. 6a und 6b).

Das Oberteil O weist ein Gehäuse 11 auf, in welchem der Schnappmechanismus ausgebildet ist und das auf der Seite, die dem zu transportierenden Gegenstand zugewandt ist, mit einem Deckel 12 verschlossen werden kann. Die dem Unterteil U zugewandte Seite ist mit Hilfe eines Bodens 111 verschlossen. Dies hat insbesondere den Vorteil, dass man nicht von außen in den Schnappmechanismus eingreifen kann. Dieser kann somit weder versehentlich beschädigt noch durch Unbefugte manipuliert werden. Der Deckel 12 hat einerseits Ausnehmungen 92, durch welche Befestigungselemente führbar sind, so dass der Deckel 12 mit dem Gehäuse 11 beispielsweise verschraubt werden kann. Außerdem hat der Deckel 12 Ausnehmungen 18 zum Befestigen des zu transportierenden Gegenstandes an dem Deckel 12 bzw. dem Oberteil O.

Das Gehäuse 11 hat (wie Fig. 2 zeigt) ferner eine vordere Stirnwand 115 und eine hintere Stirnwand 114, sowie zwei Seitenwände 113. Es wird von dem Boden 111 in einen oberen Teil, der den Schnappmechanismus aufnimmt, und einen unteren Teil, der das Unterteil U des Adapters 10 aufnimmt unterteilt. In der Mitte des Bodens 111 ist im oberen Teil des Gehäuses ein Dorn 112 oder Zapfen ausgebildet. Dessen Position wird zur besseren Orientierung bei der Beschreibung der Lage der verschiedenen Bauteile im Folgenden als "die Mitte" des Gehäuses 11 angesehen, gleichwohl muss dies nicht zwingend die tatsächliche geometrische Mitte des Gehäuses 11 markieren.

Der Schnappmechanismus besteht beispielsweise aus zwei Schnappvorrichtungen 30, einem als Drehscheibe ausgebildeten Kopplungsglied 70, welches die Schnappvorrichtungen 30 mit einander koppelt, und vier Federn 60, wobei je zwei Federn 60 eine Schnappvorrichtung 30 in jeweils entgegengesetzten Richtungen R1, R2 mit einer permanenten Kraft beaufschlagen. Jede Schnappvorrichtung umfasst einen Schieber 81, 82 sowie mehrere schwenkbaren Rastelementen 50, die schwenkbar in den Schiebern 81, 82 angeordnet sind.

Die Rastelemente 50 haben eine quaderähnliche Grundform mit einer der Mitte des Gehäuses 11 zugewandten breiten Innenseite 58, einer der Mitte des Gehäuses 11 abgewandten breiten Außenseite 59, zwei schmalen Seitenflächen 56 und mit einem oberen Ende 51 sowie einem unteren Ende 52. Die Stirnseiten der Enden 51, 52 sind jeweils gerundet oder abgeschrägt, wodurch am unteren Ende 52 eine der Mitte des Gehäuses 11 zugewandte Einlaufschräge 55 entsteht. Ebenfalls am unteren Ende 52 ist ein Rastvorsprung 54 ausgebildet. An den einander gegenüberliegenden Seitenflächen 56 der quaderähnlichen Grundform sind zylinderförmige Zapfen 53 ausgebildet, die mit der Zylinderbasisfläche an der Seitenfläche 56 anliegen. Die Zapfen 53 der Seitenflächen 56 eines Rastelementes 50 liegen sich dabei derart gegenüber, dass sie eine Drehachse A bilden, um die das Rastelement 50 in Richtung S1 bzw. Richtung S2 schwenkbar ist. Als Lager für die Zapfen 53 dient jeweils eine im Gehäuse 11 ausgebildete Lagerschale 57.

Das Kopplungsglied 70 ist in der vorliegenden Ausführungsform als Drehscheibe ausgebildet. Sie hat eine mittlere Ausnehmung 72, mit der sie auf den Dorn 112 des Gehäuses 11 aufsteckbar ist, so dass sie gedreht werden kann. Sie hat außerdem zwei Ausnehmungen 71, die die Form zweier gebogener Langlöcher haben. Jede langlochförmige Ausnehmung 71 hat ein erstes Ende 711 und ein zweites Ende 712, wobei das erste Ende 711 auf einem nahe der Mitte der Drehscheibe 70 liegenden Radius ausgebildet ist und das zweite Ende 712 auf einem nahe dem äußeren Rand der Drehscheibe 70 liegenden Radius. Die Drehscheibe 70 hat außerdem eine Ausnehmung 74, durch welche ein (nicht dargestelltes) Sicherungselement derart geführt werden kann, dass ein Bewegen der Drehscheibe 70 verhindert wird. Außerdem ist an der Drehscheibe 70 exzentrisch ein Führungselement 73 vorgesehen, mit dessen Hilfe die Drehscheibe 70 um den Dorn 112 gedreht werden kann. Dazu wird beispielsweise eine (nicht dargestellte) Schnur an dem Führungselement 73 angebracht, die über (nicht dargestellte) Öffnungen aus dem Gehäuse 11 herausgeführt wird..

Die Schieber 81, 82 sind derart in das Gehäuse 11 einsetzbar, dass sie in Richtung R1 bzw. Richtung R2 bewegbar sind. Dabei ist der erste Schieber 81 zwischen der Mitte des Gehäuses 11 und der vorderen Stirnwand 115 und der zweite Schieber 82 zwischen der Mitte des Gehäuses 11 und der hinteren Stirnwand 114. In den Schiebern 81, 82 sind Ausnehmungen 83 ausgebildet, in die die Rastelemente 50 einsetzbar sind. Jede Ausnehmung 83 hat eine Mitte des Gehäuses 11 zugewandte Innenkante 85 und eine der Mitte des Gehäuses 11 abgewandte Außenkante 86. An der Unterseite jedes Schiebers 81, 82 ist ein Dorn 84 ausgebildet. Der Dorn 84 ist im montierten Zustand in eines der langlochförmige Ausnehmung 71 eingesetzt. Je nach Bedarf sind die Innenkante 85 und die Außenkante 86 angeschrägt.

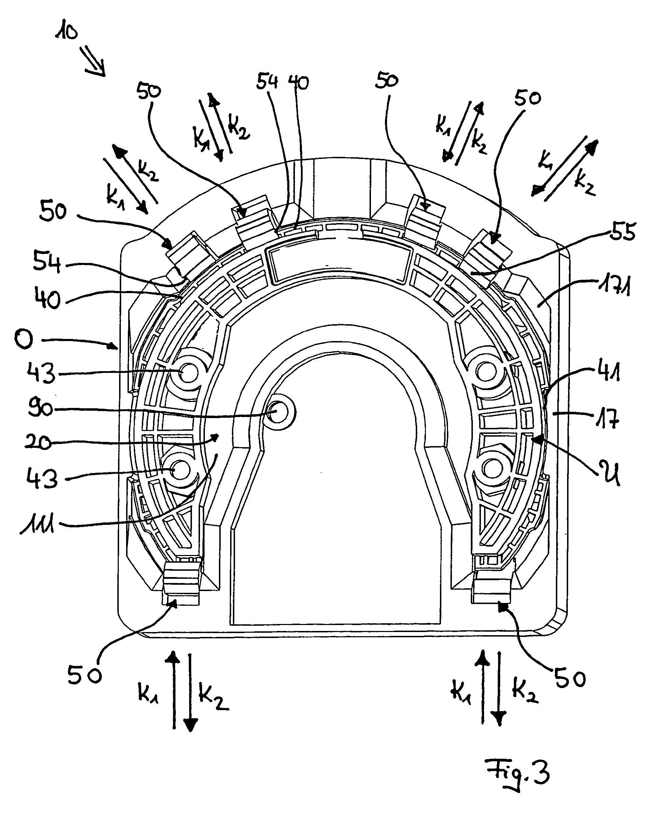

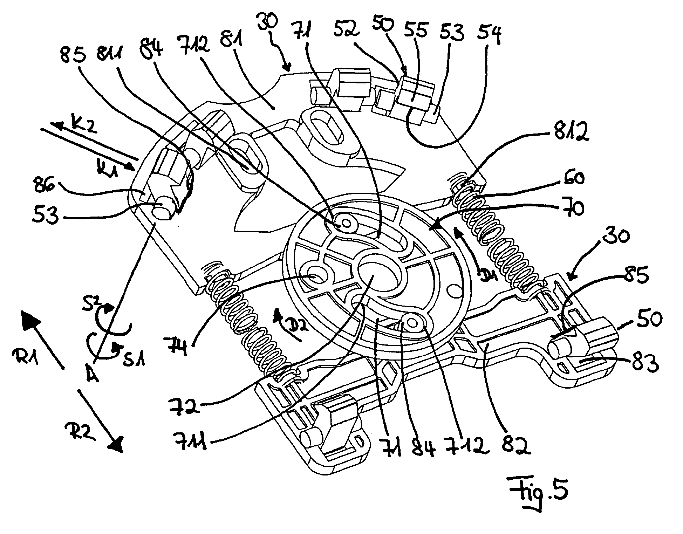

In Fig. 2 blickt man auf die Unterseite und damit auf den Boden 111 des Gehäuses 11. Man erkennt, dass in der Unterseite eine Ausnehmung 20 ausgeformt ist, die zur Aufnahme des Unterteils U dient. Die Ausnehmung 20 wird von einem umlaufenden Rand 21 begrenzt. In diesem Rand 21 sind Durchbrüche 15 ausgebildet, durch welche die Rastelemente 50 von der Oberseite des Gehäuses 11 hindurch ragen. Dabei sind die Rastvorsprünge 54 der Rastelemente 50 zur Ausnehmung 20 hin orientiert und die Durchbrüche 15 sind derart bemessen, dass die Rastelemente 50 in ihnen verkippbar sind (vgl. dazu auch Beschreibung der Figuren 3 und 5).

Im Bereich der Seitenwände 113 des Gehäuses ist der Rand 21 der Ausnehmung 20 zudem von besonderer Gestalt. Dort ist nämlich einerseits mittig auf jeder Seite ein Vorsprung 17 ausgebildet. Andererseits sind auf jeder Seite zwei Schrägflächen 171 vorgesehen, die jeweils schräg nach innen zum Vorsprung 17 hin verlaufen. Auf diese Weise wird eine Verdrehsicherung gebildet, die verhindert, dass sich das Oberteil O gegenüber dem Unterteil U verdrehen kann, sobald das Oberteil O auf dem Unterteil U montiert ist.

In Fig. 3 erkennt man, dass die Vorsprünge 17 des Oberteils O in entsprechende Ausnehmungen 41 des Unterteils U eingreifen. Das Unterteil U ist hier in die Ausnehmung 20 eingesetzt. Dabei liegen der Rastrand 40 des Unterteils U und die durch den Rastvorsprung 54 der Rastelemente 50 gebildete Fläche derart aneinander an, dass die Rastvorsprünge 54 das Unterteil U am Rastrand 40 in dem Oberteil O festhalten.

Für die Funktion des Adapters ist es wichtig, dass die Rastelemente 50 in einer ersten Richtung K1 in Richtung der Mitte des Gehäuses 11 gekippt sein können. In dieser Stellung halten sie das Unterteil U fest. Sind die Rastelemente 50 dagegen in einer zweiten Richtung K2 von der Mitte des Gehäuses 11 weg gekippt, so kann das Oberteil O auf das am Motorrad montierte Unterteil U aufgesetzt oder von diesem abgenommen werden. Dabei befinden sich stets alle Rastelemente 50 entweder in der zur Mitte hin gekippten Position oder es sind alle Rastelemente 50 in der von der Mitte weg gekippten Position. Man erkennt, dass die erste und die zweite Richtung K1, K2 senkrecht zur Fügerichtung F, in der das Oberteil O auf das Unterteil U aufgesetzt wird, verlaufen.

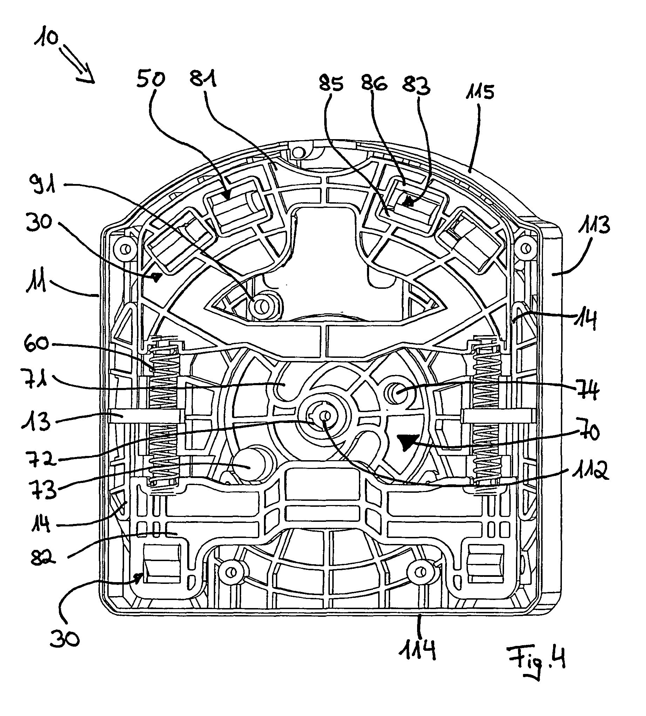

Die Funktionsweise des Verkippmechanismus kann man insbesondere in den Figuren 4 und 5 nachvollziehen. Dabei blickt man in Fig. 4 von oben auf das Oberteil O dessen Deckel 12 abgenommen wurde und erkennt den in dem Gehäuse 11 montierten Schnappmechanismus, insbesondere die Schnappvorrichtungen 30 und das als Drehscheibe 70 ausgebildete Kopplungsglied. In Fig. 5 ist der Schnappmechanismus alleine dargestellt und man blickt auf dessen normalerweise dem Boden 111 zugewandte Seite. In beiden Figuren sind die Rastelemente 50 in die Ausnehmungen 83 der Schieber 81, 82 eingesetzt. Die Schieber 81, 82 sind wiederum über ihren Dorn 84, der jeweils in eine der langloch- bzw. bogenförmigen Ausnehmungen 71 eingesetzt ist, mit der Drehscheibe 70 verbunden. Diese kann mit Hilfe des Führungselementes 73 in einer ersten Richtung D1 und in einer dieser entgegengesetzt verlaufenden zweiten Richtung D2 um den Dorn 112 gedreht werden.

Man erkennt, dass eine Drehung der Drehscheibe 70 dazu führt, dass die Dorne 84 der Schieber 81, 82 in den langlochförmigen Ausnehmungen 71 zwischen dem ersten Ende 711 und dem zweiten Ende 712 je nach Drehrichtung wie bei einer Kulissenführung hin und her gleiten, wodurch die Schieber 81, 82 in einer Linearbewegung in Richtung R1 bzw. Richtung R2 zur Mitte des Gehäuses 11 hin oder von der Mitte des Gehäuses 11 weg bewegt werden. Die Drehbewegung der Drehscheibe wird mithin in eine Linearbewegung der Schieber 81, 82 umgesetzt.

Um die Rastelemente 50 in Ruhezustand in der zur Mitte des Gehäuses 11 hin gekippten Position - im folgenden als Rastposition bezeichnet - zu halten, sind die Schieber 81, 82 jeweils mit der in Richtung R1 bzw. in Richtung R2 wirkenden permanenten Kräften der Federn 60 beaufschlagt. Diese stützen sich jeweils mit ihrem einen Ende an einem im Gehäuse 11 ausgebildeten Steg 13 und mit ihrem anderen Ende am jeweiligen Schieber 81, 82 ab. Da der Steg 13 unbeweglich ist, drücken sie den ersten Schieber 81 von der Mitte des Gehäuses weg in Richtung R1 auf die vordere Stirnwand 115 zu und den zweiten Schieber 82 in Richtung R2 auf die hintere Stirnwand 114 zu. Man erkennt, dass die Dorne 84 der Schieber 81, 82 sich dabei in den äußeren Enden 712 der langlochförmigen Ausnehmungen 71 befinden und somit soweit wie möglich von dem Dorn 112 entfernt liegen.

Man erkennt weiter, dass jedes Rastelement 50 in der Rastposition mit seiner Innenseite 58 an der Innenkante 85 anliegt und dadurch in der in Richtung K1 gekippten Position - in der sie im verrasteten Zustand den Rastrand 40 des Unterteils U hintergreifen - festgehalten ist. Wird der entsprechende Schieber 81, 82 entgegen der Kraft der Federn 60 zur Mitte des Gehäuses 11 hin bewegt, so kommen die Außenseiten 59 der Rastelemente 50 an den Außenkanten 86 der Ausnehmungen 83 zu liegen. Die Rastelemente 50 werden dadurch in Richtung K2 verkippt, wobei sie sich um die, durch die Zapfen 53 gebildete, Achse A in Richtung S2 drehen. Das Bewegen der Schieber 81, 82 kann dabei entweder durch Betätigen des auf der Drehscheibe 70 ausgebildeten Führungselementes 73 oder durch das Ausüben einer Kraft auf die Einlaufschrägen 55 der Rastelemente 50 vorgenommen werden. Letzteres ist insbesondere beim Aufsetzen des Oberteils O auf das am Tank T montierte Unterteil U der Fall.

Um dies weiter zu vereinfachen sind am Unterteil U - wie man in den Figuren 6a und 6b erkennt - ebenfalls Einlaufschrägen 44 ausgebildet. Diese sind insbesondere über den von den Rastelementen 50 zu hintergreifenden Rastrand 40 des Unterteils U angeordnet.

Man erkennt, dass das Unterteil U eine Oberseite 45 und eine Unterseite 46 hat, wobei es mit der Unterseite 46 an den Tank T montiert ist. Die Einlaufschrägen 44 sind an der dem Oberteil O zugewandeten Oberseite 45 ausgebildet.

Wird nun das Oberteil O auf das mit seiner Unterseite 46 am Tank T montierte Unterteil U aufgesetzt, so kommen die Einlaufschrägen 55 der Rastelemente 50 auf den Einlaufschrägen 44 des Unterteils U zu liegen. Die Rastelemente 50 versperren somit zunächst das Einsetzen des Unterteils U in die Ausnehmung 20 des Oberteils O. Wird jedoch auf das Oberteil O weiterhin in Fügerichtung F eine Kraft ausgeübt, so drücken die Einlaufschrägen 44 des Unterteils U gegen die Einlaufschrägen 55 der Rastelemente 50. Da diese Schrägen jedoch parallel zu einander orientiert sind, können sie aneinander entlang gleiten und so der ausgeübten Kraft nachgeben. Die Rastelemente 50 werden automatisch senkrecht zur Fügerichtung F in Richtung K2 gekippt und geben somit die Ausnehmung 20 frei. Dabei werden die Schieber 81, 82 entgegen der Kraft der Federn 60 in Richtung R2 bzw. in Richtung R1 gedrückt bis die Rastelemente 50 mit ihren Außenseiten 59 an den Außenkanten 86 der Ausnehmungen 83 anschlagen. Dann gelangt das Unterteil U in die Ausnehmung 20. In diesem Moment wird jedoch durch die Einlaufschrägen 44 keine Kraft mehr auf die Rastelemente 50 ausgeübt. Die Federn 60 können somit die Schieber 81, 82 zurück in die Rastposition drücken. Dadurch kommen die Rastvorsprünge 54 der in Richtung K1 zurück gekippten Rastelemente 50 gegenüber dem Rastrand 40 des Unterteils U zu liegen. Wird nun versucht das Oberteil O wieder abzunehmen, so wird der Rastrand 40 gegen die Rastvorsprünge 54 gepresst. Das Oberteil O ist mit dem Unterteil U verrastet; es kann nicht mehr abgenommen werden.

Das Lösen dieser Verrastung erfolgt, indem die Drehscheibe 70 um den Dorn 112 in Richtung D2 bewegt wird. Dies kann beispielsweise durch Betätigen des Führungselementes 73 mit Hilfe einer (nicht dargestellten) Schnur geschehen. Diese wird einfach am Führungselement 73 befestigt und durch die (nicht dargestellte) Öffnung hindurch an der vorderen Stirnwand 115 aus dem Gehäuse 11 herausgeführt. Dabei kann sie beispielsweise mit Hilfe eines weiteren im Gehäuse 11 ausgebildeten Führungsdorns 91 (vgl. Fig. 4) umgelenkt bzw. geführt werden. In der Rastposition der Rastelemente 50 und der Schieber 81, 82 befindet sich das Führungselement 73 in einer der hinteren Seitenwand 114 des Gehäuses 11 zugewandten Position auf der Drehscheibe 70. Wird nun an der Schnur gezogen, so wird das Führungselement 73 in eine der vorderen Seitenwand 115 zugewandte Position gebracht. Dabei wird die Drehscheibe 70 in Richtung D2 um den Dorn 112 gedreht. Die mit Hilfe der Dorne 84 in den langlochförmigen Ausnehmungen 71 geführten Schiebers 81, 82 werden somit entgegen der Kraft der Federn 60 zur Mitte des Gehäuses 11 hin gezogen. Dabei schlagen die Außenkanten 86 der Ausnehmungen 83 gegen die Außenseiten 59 der Rastelemente 50 und kippen diese in Richtung K2 aus der Rastposition heraus. Der Rastvorsprung 40 des Unterteils U ist somit wieder freigegeben und das Oberteil O kann abgenommen werden.

Wie bereits oben ausgeführt, erkennt man in den Figuren 3, 6a und 6b außerdem, dass zwischen den Unterteil U und dem Oberteil O eine Verdrehsicherung ausgebildet ist, die im Wesentlichen aus im Oberteil O ausgebildeten Vorsprüngen 17 und im Unterteil U ausgebildeten Ausnehmungen 41 besteht. In den Figuren 6a und 6b erkennt man zudem, dass die im Unterteil U ausgebildeten Ausnehmungen 41 an der Oberseite 45 des Unterteils U von Einlaufschrägen 42 flankiert werden. Diese können beim Aufesetzen des Oberteils O entlang der Schrägen 171 gleiten. Wird das Oberteil O nicht in einer korrekten Orientierung - beispielsweise leicht verdreht - auf das Unterteil U aufgesetzt, so führen die Schrägen 171 das Oberteil O entlang dieser Einlaufschrägen 42, bis die Vorsprünge 17 in die Ausnehmungen 41 eingreifen können und das Oberteil O in der korrekten Position gegenüber dem Unterteil U ist. Dies ist insbesondere deshalb von Vorteil, weil die korrekte Position des Oberteils O somit beim Aufsetzen ertastet werden kann, ohne dass eine direkte Sicht auf das Unterteil U notwendig ist.

In Fig. 7 erkennt man, dass das Unterteil U bevorzugt an den Tankdeckelkranz I eines Tankdeckels L montiert wird. Der Tankdeckelkranz I ist üblicherweise mit Hilfe von Bolzen, die in Bohrungen 19 angebracht werden, am Tank T festgelegt. Zur Montage des Unterteils U werden diese Bolzen aus den Bohrungen 19 entfernt. Anschließend wird das Unterteil U derart über dem Tankdeckelkranz I ausgerichtet, dass die Ausnehmungen 43 über den Bohrungen 19 liegen. Danach werden Unterteil U und Tankdeckelkranz I gemeinsam durch Bolzen, die durch die Ausnehmungen 43 in die Bohrungen 19 eingebracht werden am Tank T befestigt.

Zum Festlegen des Oberteils O wird dieses in Fügerichtung F auf das Unterteil U aufgesetzt. Wie oben bereits beschrieben, verhindern dabei zunächst die in der Rastposition befindlichen Rastelemente 50, dass das Unterteil U in die an der Unterseite des Oberteils O ausgebildete Ausnehmung 20 eingesetzt werden kann. Das Oberteil O liegt zunächst quasi auf dem Unterteil U auf. Wird dann jedoch ein leichter Druck ebenfalls in Fügerichtung F auf das Oberteil O ausgelöst, so werden die Rastelemente 50 wie oben beschrieben in der senkrecht zur Fügerichtung F verlaufenden Richtung K1 nach außen gedrückt und das Unterteil U gelangt in die Ausnehmung 20, wo es anschließend durch die zurückgefederten Rastelemente 50 verrastet und festgehalten wird. Dabei ist die Kraft der Federn 60 so gewählt, dass man üblicherweise beim Aufsetzen des Oberteils O den Druck, der den Schnappmechanismus auslöst, automatisch in ein und derselben Bewegung ausübt. Das Auslösen des Schnappmechanismus kann dabei beispielsweise als Klackgeräusch wahrgenommen und so kontrolliert werden.

Man erkennt, dass es ein besonderer Vorteil der erfindungsgemäßen Lösung ist, dass das Oberteil O in einer einzigen linearen Bewegung in Fügerichtung F auf das Unterteil U aufsetzbar ist, wobei zum Verrasten lediglich ein leichter Druck auf das Oberteil O ausgeübt werden muss. Es ist nicht erforderlich freie Sicht auf das Unterteil zu haben oder zusätzlich oder sonstige Stellhebel oder Montageelemente zu bedienen.

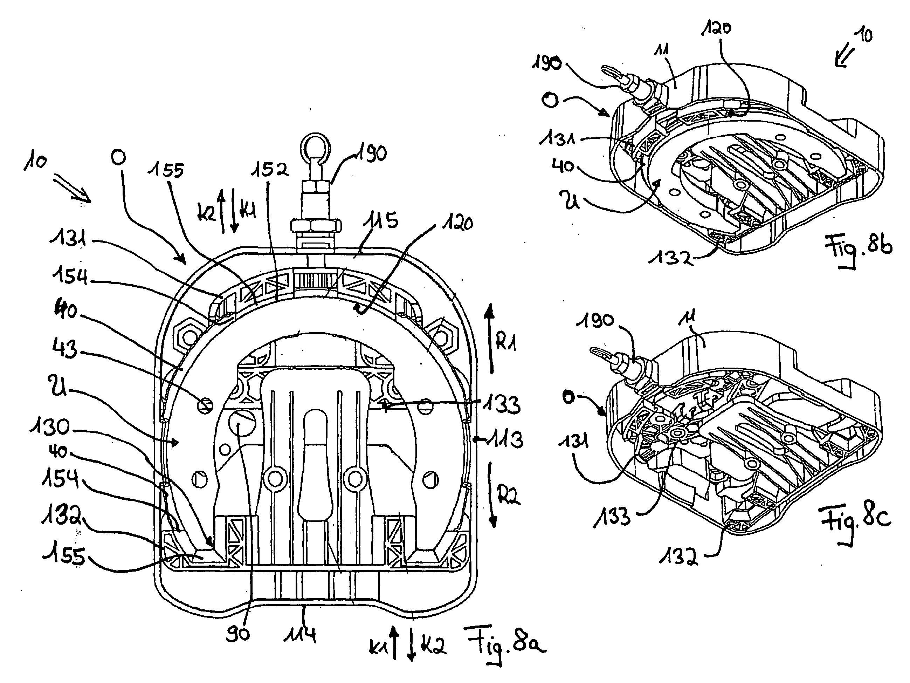

In den Figuren 8a bis 8c, 9, 10a und 10b ist eine weitere Ausführungsvariante der erfindungsgemäßen Schnappvorrichtungen 130 dargestellt. Wie bei dem vorangehend darstellten Ausführungsbeispiel, wird auch hier das Unterteil U in eine Ausnehmung 120, die im Oberteil O ausgebildet ist, eingesetzt und im eingesetzten Zustand von dem Schnappmechanismus hintergriffen, wodurch das Oberteil O an dem Unterteil U festgehalten wird.

Jede Schnappvorrichtung 130 besteht auch hier aus einem Schieber 181, 182, wobei an jedem Schieber 181, 182 wenigstens ein Rastelement 131, 132 ausgebildet ist. Die Schieber 181, 182 und mithin die Schnappvorrichtungen 130 sind über zwei als Kniehebel 133 ausgebildete Kopplungsglieder mit einander zwangsgekoppelt.

An den Rastelementen 131, 132 ist jeweils wenigstens eine Rastkante 154 ausgebildet, die den Rastrand 40 des Unterteils U hintergreift, wenn der Schnappmechanismus eingerastet ist. Über jeder Rastkante 154 ist ein Rastrand 152 mit einer Einlaufschräge 155 ausgebildet. Man erkennt, dass bei diesem Ausführungsbeispiel die Ausnehmung 120 unmittelbar durch die Rastelemente 131, 132 gebildet wird. Dabei wird die Ausnehmung 120 in Richtung der vorderen Stirnwand 115 des Gehäuses 11 durch das erste Rastelement 131 und in Richtung der hinteren Stirnwand 114 durch das zweite Rastelement 132 begrenzt.

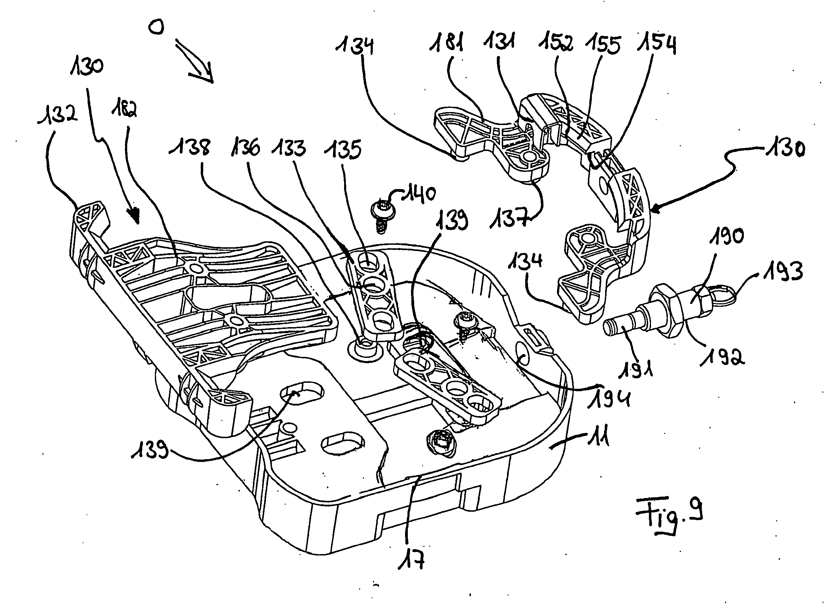

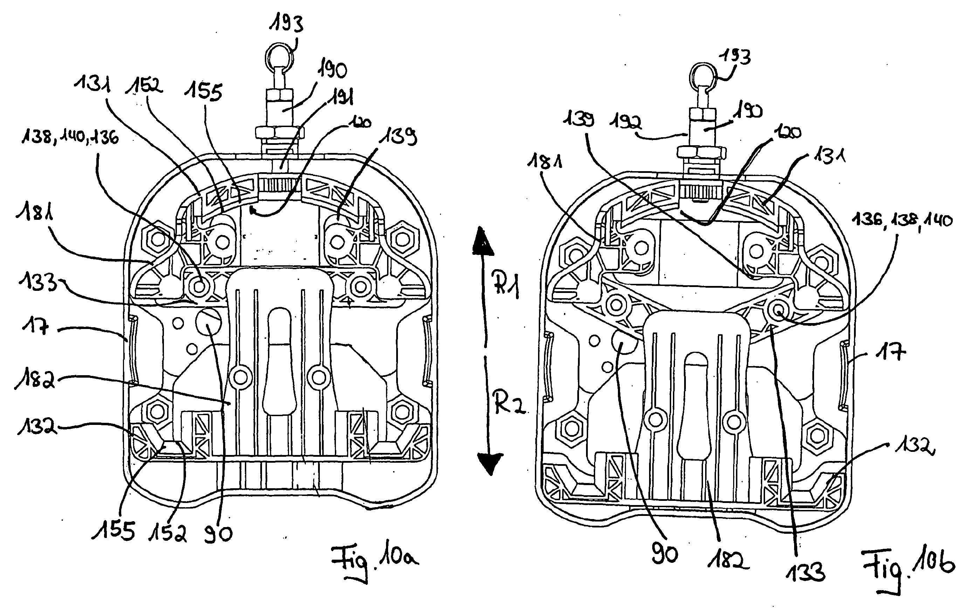

Man erkennt insbesondere in den Figuren 9, 10a und 10b, dass die Schieber 181, 182 derart miteinander über die Kniehebel 133 gekoppelt sind, dass eine Bewegung des einen Schiebers 181, 182 in einer ersten Richtung R1 oder R2 automatisch eine Bewegung des anderen Schiebers 181, 182 in der entgegengesetzten Richtung R2 oder R1 bewirkt.

Die Kniehebel 133 sind dazu mit einer mittleren Bohrung 136 und jeweils zwei Langlochbohrungen 135 ausgebildet. Die mittlere Bohrung 136 wird auf einen im Gehäuse 11 ausgebildeten Dorn 138 aufgesetzt werden und beispielsweise mit Hilfe einer Schraube 140 derart fixiert, dass der Kniehebel 133 um den Dorn 138 drehbar ist. Die Langlochbohrungen 135 dienen als Führung für jeweils an den Rastelementen 131, 132 ausgebildete Dorne 134, die gleitbar in die Langlöcher 135 eingesetzt werden.

Die gekoppelte Bewegung des ersten und des zweiten Schiebers 181, 182 lässt sich insbesondere in den Figuren 10a und 10b nachvollziehen. Dabei ist der Schnappmechanismus in Fig. 10a in der Rastposition. Wird nun beispielsweise der erste Schieber 181 aus dieser Rastposition heraus in Richtung R1 bewegt, so ziehen die in die entsprechenden Langlöcher 135 der Kniehebel 133 eingesetzten Domen 134 des ersten Schiebers 181 die Kniehebel 133 ebenfalls in Richtung R1. Die Kniehebel 133 drehen sich dadurch um den Dorn 138. In der Folge wird der zweite Schieber 182, dessen Dorne 134 ebenfalls in Langlöchern 135 der Kniehebel 133 geführt werden in Richtung R2 bewegt. Es ist selbstverständlich, dass in gleicher Weise eine Bewegung des zweiten Schiebers 182 zu einer Bewegung des ersten Schiebers 181 führt und dass die Bewegungen des ersten und des zweiten Schiebers 181, 182 sowie der Kniehebel 133 stets synchron ablaufen.

Um bei diesem Bewegungsablauf eine noch bessere Führung der Schieber 181, 182 und mithin der Rastelemente 131, 132 zu gewährleisten, sind im Gehäuse 11 zusätzliche Langlöcher 139 ausgebildet, in welche an der Unterseite der Schieber 181, 182 ausgebildete Dorne 137 eingesetzt werden. Diese Dorne 137 gleiten entsprechend der Bewegung der Schieber 181, 182 in den Langlöchern 139 in Richtung R1 oder in Richtung R2 und unterstützen so die Linearität der Bewegung der Schieber 181, 182.

Um den Schnappmechanismus in der in Fig. 10a dargestellten Rastposition zu halten, ist die eine der beiden Schnappvorrichtungen 130, die im gezeigten Beispiel aus dem ersten Schieber 181 und dem erste Rastelement 131 besteht, mit einem federbelasteten Betätigungsmechanismus 190 gekoppelt, der den Schieber 181 in Richtung R2 drückt.

Der Betätigungsmechanismus 190 besteht aus einer aus dem Gehäuse 11 vorstehenden Hülse 192 in der ein Rastbolzen 191 sowie eine (nicht dargestellte) Feder angeordnet sind. Der Rastbolzen 191 ist durch eine Ausnehmung 194, die in der vorderen Stirnwand 115 des Gehäuses 11 ausgebildet ist, geführt und mit dem ersten Schieber 181 verbunden. Die Feder ist dabei so angeordnet, dass sie den Rastbolzen 191 in Richtung R2 drückt. Mithin wird auch der erste Schieber 181 in Richtung R2 gedrückt und die Schnappvorrichtungen 130 werden in der Rastposition gehalten. Diese entspricht der Ruhestellung der Feder und des Schnappmechanismus.

Wird nun das Oberteil O auf das am Tank montierte Unterteil U gesetzt, so kommen die Einlaufschrägen 155 der Rastränder 152 auf den Einlaufschrägen 44 des Unterteils U zu liegen - da sich der Schnappmechanismus wie oben ausgeführt in der Ruheposition befindet, die die Rastposition ist. Wird nun weiter in der Fügerichtung F auf das Oberteil O ein leichter Druck ausgeübt, so gleiten die Einlaufschrägen 155 entlang den Einlaufschrägen 44 wobei das erste Rastelement 131 entgegen der Kraft der Feder in Richtung K1, die hier mit der Richtung R1 zusammenfällt, gedrückt wird. Somit öffnet sich der Schnappmechanismus und das Oberteil O kann das Unterteil U in die Ausnehmung 120 aufnehmen. Sobald dies der Fall ist, wird jedoch keine Kraft mehr auf die Einlaufschrägen 155 der Rastelemente 131, 132 ausgeübt und die Feder des Betätigungsmechanismus 190 drückt die Schieber 181, 182 zurück in die Rastposition. Dabei kommen die Rastkanten 154 über dem Rastrand 40 des Unterteils U zu liegen, so dass das Unterteil U in dem Oberteil O festgehalten wird.

Zum Lösen der so erreichten Verrastung ist an dem Betätigungsmechanismus 190 eine Zugvorrichtung 193 ausgebildet. Wird diese in Richtung R1 gezogen, so wird der Rastbolzen 191 entgegen der Kraft der Feder ebenfalls in Richtung R1 bewegt. Mithin wird auch das Rastelement 131 in Richtung R1 gezogen und der Schnappmechanismus 130 wird geöffnet.

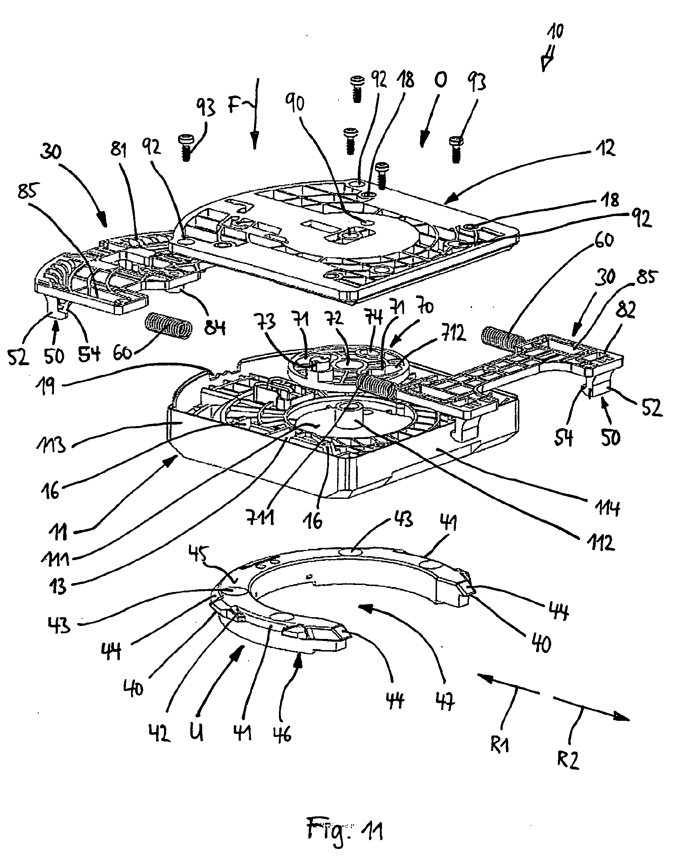

Fig. 11 zeigt eine noch andere Ausführungsform der Erfindung. Der darin allgemein mit 10 bezeichnete Adapter ist ebenfalls zum Anbringen eines (nicht dargestellten) Gegenstandes am Tank eines (gleichfalls nicht gezeigten) Motorrades ausgebildet. Der Gegenstand ist beispielsweise ein Tankrucksack oder eine Gepäcktasche. Es kann sich aber auch um eine Box oder um ein elektronisches Gerät handeln, beispielsweise ein Mobilfunktelefon oder ein Navigationsgerät.

Der Adapter 10 hat ein Oberteil O, das mittels (nicht gezeigter) Befestigungsmittel an dem am Tank festzulegenden Gegenstand befestigt ist, und ein Unterteil U, das mittels (ebenfalls nicht gezeigter) Schrauben am (nicht dargestellten) Tankring des Tankstutzens fixiert ist. In dem Oberteil O ist ein Schnappmechanismus ausgebildet, mit dessen Hilfe das Unterteil U in dem Oberteil O festlegbar ist.

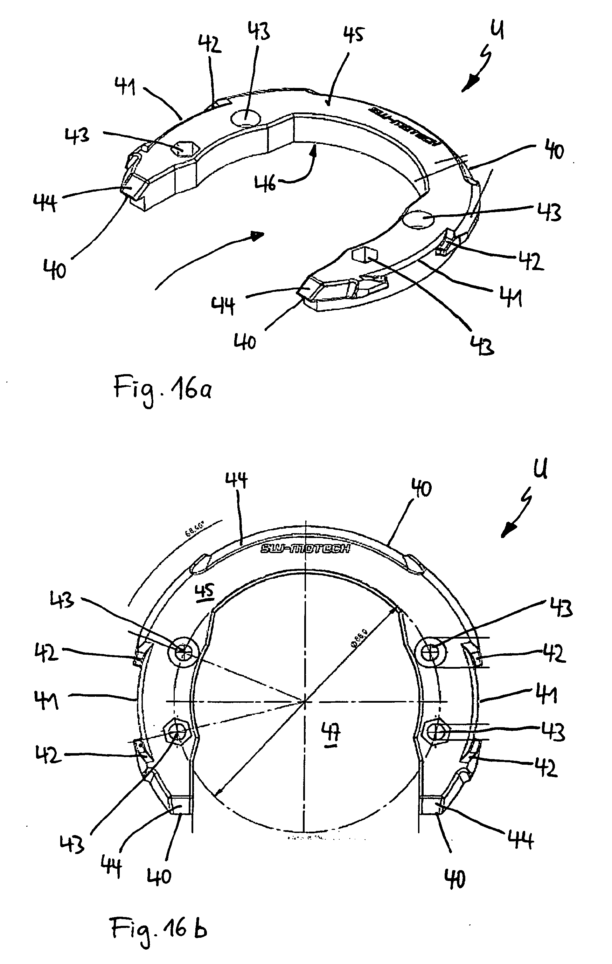

Das Unterteil U ist im Wesentlichen hufeisenförmig ausgebildet. Es hat mehrere Bohrungen 43, die zur Befestigung am Tankring des Motorrades dienen (siehe dazu die deutsche Patentanmeldung 10 2009 039 017, auf deren Inhalt hiermit vollinhaltlich Bezug genommen wird). Zum Festlegen des Unterteils U in dem Oberteil O ist an der Außenseite des Hufeisens zumindest abschnittsweise ein Rastrand 40 vorgesehen. Dieser wird seitlich von zwei Ausnehmungen 41 unterbrochen, die - wie später noch näher ausgeführt wird - innerhalb des Oberteils O als Verdrehsicherung dienen. An einer Oberseite ist der Rastrand 40 mit Einlaufschrägen 44 versehen, um das Fügen des Oberteils O auf dem Unterteil U zu erleichtern (siehe Fig. 16a, 16b). Die Einlaufschrägen 44 sind bevorzugt in Bereichen des Rastrandes 40 ausgebildet, die von Rastelementen 50 zu hintergreifen sind.

Das Oberteil O weist ein Gehäuse 11 auf, in welchem der Schnappmechanismus ausgebildet ist und das auf der Seite, die dem zu transportierenden Gegenstand zugewandt ist, mit einem Deckel 12 verschlossen ist. Die dem Unterteil U zugewandte Seite ist mit einem Boden 111 verschlossen. Dies hat den Vorteil, dass man nicht von außen in den Schnappmechanismus eingreifen kann. Dieser kann somit weder versehentlich beschädigt noch durch Unbefugte manipuliert werden. Der Deckel 12 hat Ausnehmungen 92 für Schrauben 93. Er wird mit diesen fest mit dem Gehäuse 11 verschraubt. Außerdem hat der Deckel 12 Ausnehmungen 18 zum Festlegen des Oberteils O an dem zu transportierenden Gegenstand.

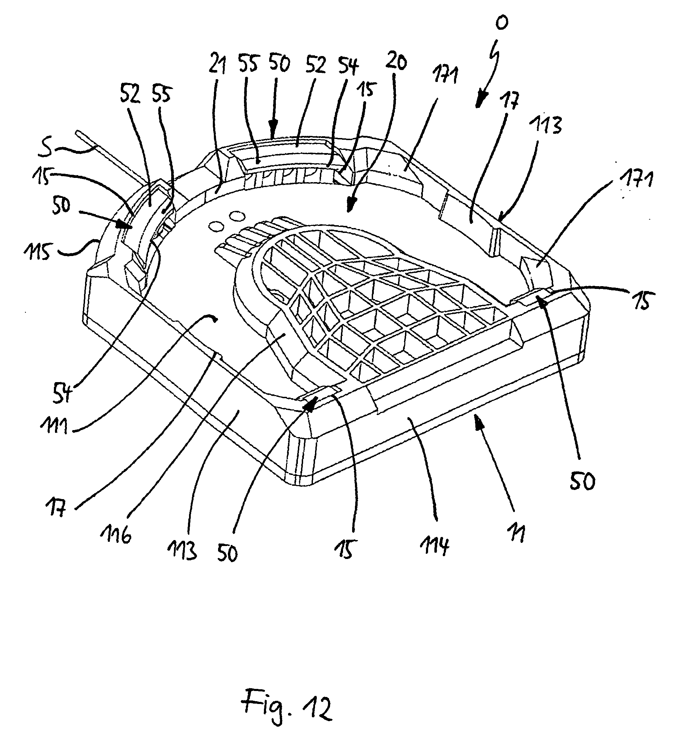

Das Gehäuse 11 hat (wie Fig. 12 näher zeigt) eine vordere Stirnwand 115 und eine hintere Stirnwand 114 sowie zwei Seitenwände 113. Es wird von dem Boden 111 in einen oberen Teil und einen unteren Teil unterteilt, wobei der obere Teil den Schnappmechanismus und der untere Teil das Unterteil U aufnimmt. In Fig. 12 ist der untere Teil des Gehäuses 11 für die Aufnahme des Unterteils U gezeigt. Im oberen Teil des Gehäuses 11 (siehe Fig. 11) ist etwa mittig ein Dorn 112 oder Zapfen ausgebildet. Dessen Position wird zur besseren Orientierung bei der Beschreibung der Lage der verschiedenen Bauteile im Folgenden als "die Mitte" des Gehäuses 11 angesehen, gleichwohl muss dies nicht zwingend die tatsächliche geometrische Mitte des Gehäuses 11 markieren.

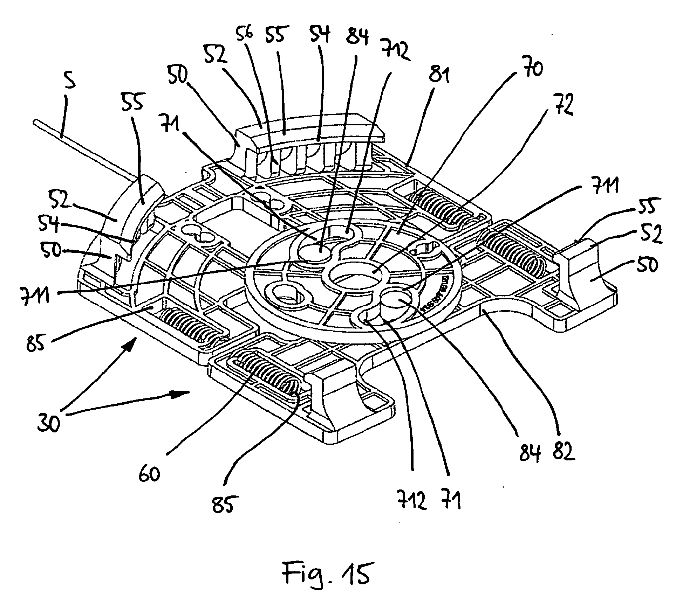

Der Schnappmechanismus besteht aus zwei Schnappvorrichtungen 30 mit einem ersten Schieber 81 und einem zweiten Schieber 82, einem als Drehscheibe ausgebildeten Kopplungsglied 70, welches die Schieber 81, 82 der Schnappvorrichtungen 30 gegenläufig miteinander koppelt, und vier Federn 60, wobei zwei Federn 60 den Schieber 81 in Richtung R2 und zwei weitere Federn 60 den Schieber 82 in die entgegengesetzte Richtung R1 mit einer permanenten Kraft beaufschlagen. Jeder Schieber 81, 82 ist hierzu randseitig mit Ausnehmungen 85 versehen, welche die Federn 60 symmetrisch zur Mitte aufnehmen. Jede Feder stützt sich dabei mit einem Ende an einem Vorsprung 16 im Gehäuse 11 ab, während das jeweils anderen Ende der Feder 60 innerhalb der Ausnehmung 85 an dem Schieber 81 bzw. 82 angreift. Damit die Federn 60 bei der Montage des Oberteils O nicht herausfallen können, sind diese in den Schiebern 81, 82 endseitig eingehakt (siehe dazu Fig. 15). Anstelle von vier Federn 60 können auch mehr oder weniger Federn verwendet werden. Wichtig ist, dass die Schieber 81, 82 symmetrisch belastet sind, damit sie sich während der Hin- und Herbewegung entlang der Richtungen R1 und R2 nicht verkanten.

An jedem Schieber 81, 82 sind Rastelemente 50 ausgebildet, die bevorzugt einstückig mit den Schieber 81, 82 sind. Die Rastelemente 50 sind im Wesentlichen hakenförmig ausgebildet. Sie haben an ihren freien Enden 52 jeweils eine Rastkante 54, die den Rastand 40 des Unterteils U hintergreift, wenn das Oberteil O auf das Unterteil U aufgesetzt ist und der Schnappmechanismus beide Teile O, U miteinander verrastet. Über jeder Rastkante 54 ist eine Einlaufschräge 55 ausgebildet, um das Fügen der Teile O, U zu erleichtern. Man erkennt in Fig. 15, dass die Rastelemente 40 mit Rippen 56 versehen sind. Ebenso weisen die Schieber 81, 82 eine Rippenstruktur auf. Dadurch wird zum einen die Stabilität der Rastelemente 50 und der Schieber 81, 82 erhöht. Zum anderen reduziert sich das Gewicht des Oberteils, was sich günstig auf die Handhabung auswirkt. Aus diesem Grund weisen auch das Gehäuse 11, der Deckel 12 und das Kopplungsglied jeweils eine Rippenstruktur auf.

Das Kopplungsglied 70 ist in der vorliegenden Ausführungsform als Drehscheibe ausgebildet. Sie hat eine mittlere Ausnehmung 72, mit der sie auf den Dorn 112 des Gehäuses 11 aufsteckbar ist, so dass sie gedreht werden kann. Sie hat außerdem zwei Ausnehmungen 71 in Form gebogener Langlöcher. Jede langlochförmige Ausnehmung 71 hat ein erstes Ende 711 und ein zweites Ende 712, wobei das erste Ende 711 auf einem nahe der Mitte der Drehscheibe 70 liegenden Radius ausgebildet ist und das zweite Ende 712 auf einem nahe dem äußeren Rand der Drehscheibe 70 liegenden Radius. Die Drehscheibe 70 hat außerdem eine Ausnehmung 74, in die ein (nicht dargestelltes) Sicherungselement derart eingeführt werden kann, dass ein Bewegen der Drehscheibe 70 nicht mehr möglich ist. Außerdem ist an der Drehscheibe 70 exzentrisch ein Führungselement 73 vorgesehen, mit dessen Hilfe die Drehscheibe 70 um den Dorn 112 gedreht werden kann. Dazu wird beispielsweise eine Schnur S an dem Führungselement 73 angebracht, die über einen Durchbruch 19 aus dem Gehäuse 11 herausgeführt wird.

Die Schieber 81, 82 sind derart in das Gehäuse 11 eingesetzt, dass sie entlang der Richtungen R1 und R2 linear hin und her bewegbar sind. Dabei ist der erste Schieber 81 zwischen der Mitte des Gehäuses 11 und der vorderen Stirnwand 115 und der zweite Schieber 82 zwischen der Mitte des Gehäuses 11 und der hinteren Stirnwand 114 angeordnet. An der Unterseite jedes Schiebers 81, 82 ist ein Dorn 84 ausgebildet. Jeder Dorn 84 sitzt im montierten Zustand in einer der langlochförmigen Ausnehmungen 71 im Kopplungsglied 70, so dass die innerhalb des Gehäuses 11 linear zwangsgeführten Schieber 81, 82 beim Drehen des Kopplungsgliedes 70 entlang der Richtungen R1, R2 vor und zurück bewegt werden. Die Ausnehmungen 71 im Kopplungsglied 70 und die Dorne 84 der Schieber 81, 82 bilden mithin eine Art Kulissenführung, die eine Drehbewegung des Kopplungsglieds 70 in eine Linearbewegung der Schieber 81, 82 umsetzt. Gleichzeitig sind die Schieber 81, 82 miteinander zwangsgekoppelt, d.h. eine Bewegung des ersten Schiebers 81 wird unmittelbar in eine gegenläufige Bewegung des zweiten Schiebers 82 umgesetzt, so dass sich beide Schieber 81, 82 stets synchron bewegen.

In Fig. 12 blickt man auf die Unterseite und damit auf den Boden 111 des Gehäuses 11. Man erkennt, dass in der Unterseite eine Ausnehmung 20 ausgeformt ist, die zur Aufnahme des Unterteils U dient. Die Ausnehmung 20 wird von einem umlaufenden Rand 21 begrenzt. In diesem Rand 21 sind Durchbrüche 15 ausgebildet, durch welche die Rastelemente 50 von der Oberseite des Gehäuses 11 her hindurchragen. Dabei sind die Rastvorsprünge 54 der Rastelemente 50 zur Ausnehmung 20 hin orientiert und die Durchbrüche 15 sind derart bemessen, dass sich die Rastelemente 50 in den Richtungen R1 und R2 vor und zurück bewegen können.

Im Bereich der Seitenwände 113 des Gehäuses ist der Rand 21 der Ausnehmung 20 zudem von besonderer Gestalt. Dort ist einerseits mittig auf jeder Seite ein Vorsprung 17 ausgebildet. Andererseits sind auf jeder Seite zwei Schrägflächen 171 vorgesehen, die jeweils schräg nach innen zum Vorsprung 17 hin verlaufen. Auf diese Weise wird zusammen mit den Ausnehmungen 41 im Unterteil U eine Verdrehsicherung gebildet, die verhindert, dass sich das Oberteil O gegenüber dem Unterteil U verdrehen kann, sobald das Oberteil O auf dem Unterteil U montiert ist.

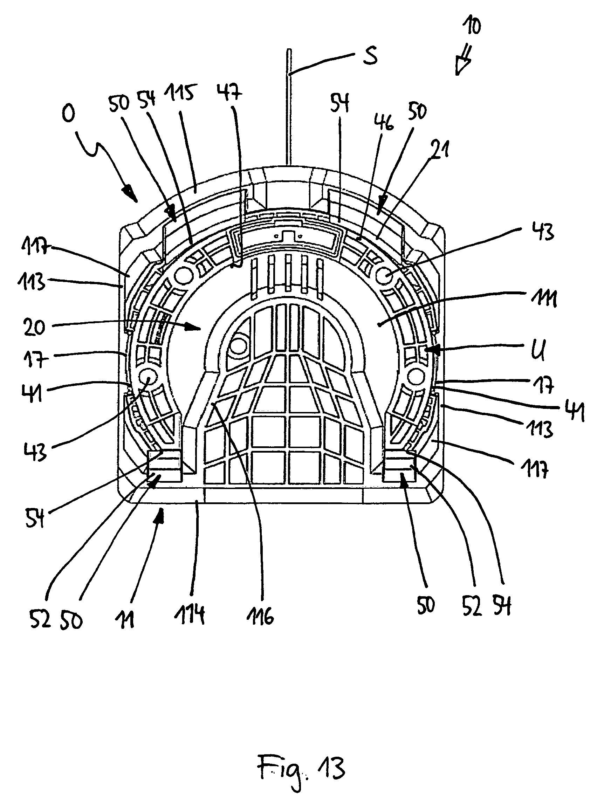

In Fig. 13 erkennt man, dass die Vorsprünge 17 des Oberteils O in die entsprechenden Ausnehmungen 41 des Unterteils U eingreifen. Das Unterteil U ist hier in die Ausnehmung 20 eingesetzt. Dabei drücken die Federn 60 die Schieber 81, 82 und damit die Rastelemente 50 permanent zusammen, so dass die Rastvorsprünge 54 der Rastelemente 50 den Rastrand 40 des Unterteils U hintergreifen. Das Unterteil U ist damit in dem Oberteil gehalten. Die Kraft der Federn 60 ist derart bemessen, dass sich das Oberteil O auch während der Fahrt mit dem Motorrad nicht versehentlich von dem Unterteil U lösen kann. Der Gegenstand ist damit stets sicher und zuverlässig auf dem Tank fixiert.

Die gekoppelte Bewegung des ersten und des zweiten Schiebers 81, 82 lässt sich insbesondere in Fig. 15 nachvollziehen, in welcher der Schnappmechanismus alleine dargestellt ist. Dabei befindet sich der Schnappmechanismus in der Rastposition, d.h. die Federn 60 drücken die Schieber 81, 82 soweit zusammen, dass die Rastelemente 50 mit ihren Rastvorsprüngen 84 den Rastrand 40 des Unterteil U hintergreifen. Die Dorne 84 der Schieber 81, 82 befinden sich in dieser Stellung im ersten Ende 711 der langlochförmigen Ausnehmungen 71.

Wird durch Ziehen an der Schnur S das Kopplungsglied 70 gedreht, dann werden die in den bogenförmigen Ausnehmungen 71 liegenden Dorne 84 der Schieber 81, 82 in Richtung der Enden 712 zwangsbewegt und aufgrund des spiralförmigen Verlaufs der Ausnehmungen 71 zwangsweise in Richtung R1 bzw. R2 bewegt. Dadurch bewegen sich auch die beiden Schieber 81, 82 voneinander weg in die jeweils entgegengesetzte Richtung R1 bzw. R2, wobei sich die Schieber 81, 82 soweit voneinander weg bewegen, dass die Rastvorsprünge 54 der Rastelemente 50 den Rastrand 40 des Unterteils U freigeben. Der Schnappmechanismus öffnet sich und das Oberteil O und der daran festgelegte Gegenstand können von dem Unterteil U abgehoben werden. Lässt man die Schnur S los, schließt sich der Schnappmechanismus und die Schieber 81, 82 bewegen sich aufgrund der permanent wirkenden Federkraft wieder in ihre Ausgangspositionen zurück.

Wird umgekehrt das Oberteil O auf das mit seiner Unterseite 46 am Tankring montierte Unterteil U aufgesetzt, kommen zunächst die Einlaufschrägen 55 der Rastelemente 50 auf den Einlaufschrägen 44 des Rastrandes 40 am Unterteils U zu liegen. Die Rastelemente 50 versperren somit zunächst das Aufsetzen des Oberteils auf das Unterteils U bzw. dessen Einsetzen in die Ausnehmung 20 des Oberteils O. Wird jedoch auf das Oberteil O in Fügerichtung F eine Kraft ausgeübt, die größer ist als die Gesamtfederkraft der Federn 60, so drücken die Einlaufschrägen 44 des Unterteils U gegen die Einlaufschrägen 55 der Rastelemente 50. Weil diese Schrägen parallel zueinander orientiert sind, können sie aneinander entlang gleiten und so der ausgeübten Kraft nachgeben. Die Rastelemente 50 werden senkrecht zur Fügerichtung F in den Richtungen R1 und R2 nach außen gedrückt, bis die Rastvorsprünge 54 der Rastelemente 50 über den Rastrand 40 des Unterteils U gleiten können. Der Schnappmechanismus öffnet sich und das Unterteil U kann in die Ausnehmung 20 im Oberteil O eintreten. Sobald das Unterteil U jedoch vollständig in der Ausnehmung 20 aufgenommen ist, wird durch die Einlaufschrägen 44 keine Kraft mehr auf die Rastelemente 50 ausgeübt und die Federn 60 drücken die Schieber 81, 82 zurück in die Rastposition. Dadurch hintergreifen die Rastvorsprünge 54 der Rastelemente 50 den Rastrand 40 des Unterteils U, welches in der Ausnehmung 20 fixiert ist. Versucht man das Oberteil O durch Ziehen wieder abzunehmen, so wird der Rastrand 40 gegen die Rastvorsprünge 54 gepresst. Das Oberteil O ist mit dem Unterteil U verrastet; es kann nicht mehr abgenommen werden.

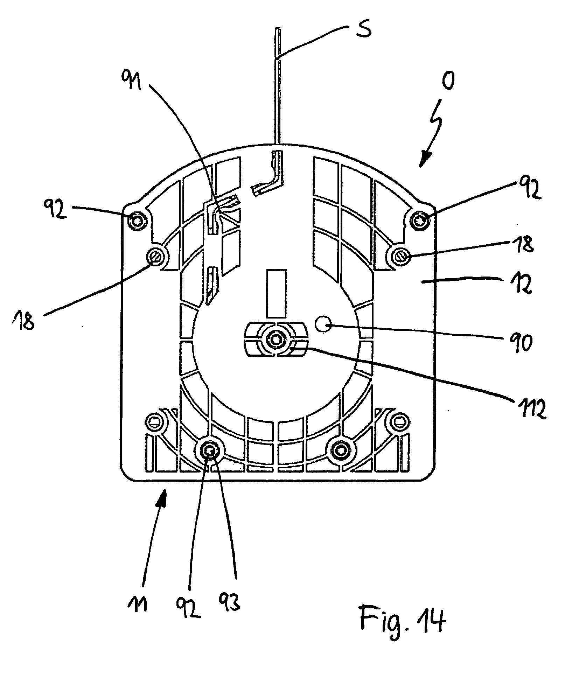

Die Schnur S zum Lösen der Rastverbindung ist an dem Führungselement 73 des Kopplungsglieds 70 befestigt und über den Durchbruch 19 hindurch an der vorderen Stirnwand 115 aus dem Gehäuse 11 herausgeführt. Dabei kann die Schnur S beispielsweise mit Hilfe eines weiteren im Gehäuse 11 ausgebildeten Führungselements 91 (vgl. Fig. 14) umgelenkt bzw. geführt werden.

In der Rastposition der Rastelemente 50 und der Schieber 81, 82 befindet sich das Führungselement 73 in einer der hinteren Seitenwand 114 des Gehäuses 11 zugewandten Position auf der Drehscheibe 70. Wird an der Schnur S gezogen, so wird das Führungselement 73 in eine der vorderen Seitenwand 115 zugewandte Position gebracht. Dabei wird die Drehscheibe 70 um den Dorn 112 gedreht. Die mit Hilfe der Dorne 84 in den langlochförmigen Ausnehmungen 71 geführten Schieber 81, 82 werden somit entgegen der Kraft der Federn 60 von der Mitte des Gehäuses 11 weg gezogen. Das gleiche gilt für die Rastelemente 50, die den Rastvorsprung 40 des Unterteils U freigegeben, so dass man Oberteil O von dem Unterteil U abnehmen kann.

Wie bereits oben ausgeführt, ist zwischen den Unterteil U und dem Oberteil O eine Verdrehsicherung ausgebildet ist, die im Wesentlichen von den im Oberteil O ausgebildeten Vorsprüngen 17 und den im Unterteil U ausgebildeten Ausnehmungen 41 gebildet wird. In den Figuren 6a und 6b erkennt man zudem, dass die im Unterteil U ausgebildeten Ausnehmungen 41 an der Oberseite 45 des Unterteils U von Einlaufschrägen 42 flankiert werden. Diese können beim Aufsetzen des Oberteils O auf den Schrägen 171 im Gehäuse 11 gleiten. Wird das Oberteil O in einer nicht korrekten Orientierung - beispielsweise leicht verdreht - auf das Unterteil U aufgesetzt, so führen die Schrägen 171 das Oberteil O entlang dieser Einlaufschrägen 42, bis die Vorsprünge 17 in die Ausnehmungen 41 eingreifen können und sich das Oberteil O in der korrekten Position gegenüber dem Unterteil U befindet. Dies ist insbesondere deshalb von Vorteil, weil die korrekte Position des Oberteils O somit beim Aufsetzen des Gegenstandes auf den Tank ertastet werden kann, ohne dass eine direkte Sicht auf das Unterteil U notwendig ist.

Die Kraft der Federn 60 so gewählt, dass man beim Aufsetzen des Oberteils O den Druck, der den Schnappmechanismus auslöst, automatisch in ein und derselben Bewegung ausübt. Das Auslösen des Schnappmechanismus kann dabei als Klack- oder Schnappgeräusch wahrgenommen und so ebenfalls kontrolliert werden.

Man erkennt, dass es ein besonderer Vorteil auch dieser erfindungsgemäßen Lösung ist, dass das Oberteil O in einer einzigen linearen Bewegung in Fügerichtung F auf das Unterteil U aufsetzbar ist, wobei zum Verrasten lediglich ein definierter Druck auf das Oberteil O ausgeübt werden muss. Es ist nicht erforderlich freie Sicht auf das Unterteil zu haben oder zusätzlich oder sonstige Stellhebel oder Montageelemente zu bedienen. Auch muss das Oberteil O und damit der daran befestigte Gegenstand gegenüber dem Unterteil nicht verschwenkt, gedreht oder verkippt werden, so dass Kollisionen mit der meist lackierten Tankoberfläche wirksam vermieden werden.

Um ein Unbefugtes Abnehmen des Gegenstandes vom Tank des Motorrades zu verhindern, können alle Ausführungsvarianten zudem gegen unerwünschtes Lösen der Verrastung gesichert werden, indem der Schnappmechanismus verriegelt wird.

Hierzu ist - wie in den Figuren 1, 3, 4, 5, 7, 11 und 14 zu erkennen - in dem Gehäuse 11, sowie in dessen Deckel 12 eine Bohrung 90 vorgesehen, die im Ruhezustand des Schnappmechanismus, der der Rastposition entspricht, deckungsgleich über einer Ausnehmung 74 liegt, die in der Drehscheibe 70 ausgebildet ist. Zum Blockieren des als Drehscheibe 70 ausgebildeten Kopplungsgliedes und mithin des Schnappmechanismus kann durch diese Bohrung 90 ein (nicht dargestelltes) Sicherungselement, beispielsweise ein Schließbolzen, geführt werden. Dieser verhindert dann, dass die Drehscheibe 70 bewegt werden kann. Mithin ist auch eine Bewegung der Schieber 81, 82 und somit das Lösen der Verrastung durch Verkippung der Rastelemente 50 nicht möglich. Handelt es sich bei dem auf dem Tank festzulegenden Gegenstand um einen Tankrucksack, so kann der Schließbolzen innerhalb des Tankrucksacks angeordnet werden.

In den Figuren 8, 10a und 10b ist ebenfalls eine Bohrung 90 im Gehäuse 11 erkennbar durch die ein Sicherungsbolzen gesteckt werden kann. Man erkennt, dass die Bohrung 90 jedoch nur dann einen solchen Bolzen aufnehmen kann, wenn sie nicht durch den benachbarten Kniehebel 133 verdeckt ist. Dies ist jedoch nur dann der Fall, wenn der Schnappmechanismus 130 in der oben beschriebenen Rastposition ist. Man erkennt weiter, dass ein Schwenken des Kniehebels 133 unmöglich ist, sobald der Bolzen durch die Bohrung 90 geführt ist.

Die Erfindung ist nicht auf eine der vorbeschriebenen Ausführungsformen beschränkt, sondern in vielfältiger Weise abwandelbar. So ist beispielsweise vorstellbar, dass die Vorsprünge 17, die in die Ausnehmungen 41 eingreifen und mit diesen zusammen die Verdrehsicherung bilden im Unterteil U und die Ausnehmungen 41 im Oberteil O ausgebildet sind. Denkbar ist auch, dass das Führungselement 73 nicht über eine Schnur S, sondern über einen Hebelmechanismus betätigt wird, der in dem Gehäuse 11 gelagert ist.

Das Unterteil U muss nicht einstückig sein. Es kann auch aus zwei ggf. halbrunden Bauteilen bestehen, die parallel zueinander auf dem Tank T befestigt werden. Das Unterteil U kann ferner als geschlossener Ring ausgebildet sein, der abschnittsweise umlaufend mit einem Rastrand 40 versehen ist. Wichtig ist, dass das Unterteil U eine Ausnehmung 47 aufweist, die der Form des zu öffnenden Tankdeckels L angepasst ist, damit dieser zum Betanken des Motorrades geöffnet werden kann.

Im unteren Teil des Oberteils O kann über dem Boden 111 eine dem Unterteil U formangepasste Stützwand 116 ausgebildet sein, die ebenfalls mit Einlaufschrägen versehen ist und so das korrekte Positionieren des Oberteils O auf dem Unterteil U zusätzlich unterstützt. Die Stützwand 116 kann ferner als Rippenstruktur ausgebildet sein, um die Stabilität des Gehäuses 11 und damit des Oberteils O zu erhöhen.

An den Schieber 81, 82 können Vorsprünge 812 ausgebildet sein, die von den Federn 60 umgriffen werden, so dass die Federn 60 zuverlässig an den Schiebern 81, 82 angreifen. Zur Führung der Schieber 81, 82 können weitere Langlöcher 811 vorgesehen sein.

Im Gehäuse 11 können zusätzliche Führungselemente 14 ausgebildet sein, an deren Seiten die Schieber 81, 82 entlang gleiten können, so dass sie seitlich geführt werden.

An der Unterseite des Oberteils O kann in der Mitte des Bodens 111 eine dem Unterteil U formangepasste Stützwand 116 ausgebildet sein, die ebenfalls mit Einlaufschrägen versehen ist und so das korrekte Positionieren des Oberteils O auf dem Unterteil U zusätzlich unterstützt.

### Bezugszeichenliste

- A: Drehachse
- D1: Richtung
- D2: Richtung
- F: Fügerichtung
- K1: Richtung
- K2: Richtung
- L: Tankdeckel
- I: Tankdeckelkranz
- O: Oberteil

- 10: Adapter
- 11: Gehäuse
- 111: Boden
- 112: Dorn
- 113: Seitenwand
- 114: hintere Stirnwand
- 115: vordere Stirnwand
- 116: Stützwand
- 12: Deckel
- 13: Steg
- 14: Führungselement
- 15: Durchbruch
- 17: Vorsprung
- 171: Schrägfläche
- 18: Ausnehmung
- 19: Durchbruch/Bohrung
- 20: Ausnehmung
- 21: Rand
- 30: Schnappvorrichtung

- 40: Rastrand
- 41: Ausnehmung
- 42: Einlaufschräge

- R1: Richtung
- R2: Richtung
- S: Schnur
- S1: Richtung
- S2: Richtung
- T: Tank
- U: Unterteil

- 43: Bohrung
- 44: Einlaufschräge
- 45: Oberseite
- 46: Unterseite
- 47: Ausnehmung

- 50: Rasteelement
- 51: oberes Ende
- 52: unteres Ende
- 53: Zapfen
- 54: Rastvorsprung
- 55: Einlaufschräge
- 56: Seitenfläche
- 57: Lagerschale
- 58: Innenseite
- 59: Außenseite

- 60: Feder

- 70: Drehscheibe
- 71: Ausnehmung
- 711: erstes Ende
- 712: zweites Ende
- 72: Ausnehmung
- 73: Führungselement
- 74: Ausnehmung

- 81: Schieber
- 811: Langloch
- 812: Vorsprung
- 82: Schieber
- 83: Ausnehmung
- 84: Dorn
- 85: Innenkante
- 86: Außenkante
- 90: Bohrung
- 91: Führungsdorn
- 92: Ausnehmung
- 93: Schrauben

- 120: Ausnehmung

- 130: Schnappvorrichtung
- 131: Rastelement
- 132: Rastelement
- 133: Kniehebel
- 134: Dorn
- 135: Langlochbohrung
- 136: mittlere Bohrung
- 137: Dorn
- 138: Dorn
- 139: Langloch

- 140: Schraube

- 152: Rastrand
- 154: Rastkante
- 155: Einlaufschräge

- 181: Schieber
- 182: Schieber

- 190: Betätigungsmechanismus
- 191: Rastbolzen
- 192: Hülse
- 193: Zugvorrichtung
- 194: Ausnehmung

## Patentansprüche

1. Adapter (10) zum Anbringen von Gegenständen am Tank (T) eines Motorrades, bestehend aus einem mit dem Tank (T) des Motorrades verbindbaren Unterteil (U) und einem mit dem anzubringenden Gegenstand koppelbaren Oberteil (O), wobei das Oberteil (O) und das Unterteil (U) in lösbarer Weise an- und/oder ineinanderfügbar sowie in gefügter Position sicherbar sind, wobei das Oberteil (O) eine Schnappvorrichtung (30, 130) aufweist, die in gefügter Position mit dem Unterteil (U) in Eingriff steht, **dadurch gekennzeichnet, dass** in dem Oberteil (O) zwei Schappvorrichtungen (30, 130) ausgebildet sind, die gegenüberliegend angeordnet und gegenläufig zueinander bewegbar sind, wobei jede Schnappvorrichtung (30, 130) wenigstens ein Rastelement (50, 131, 132) aufweist, wobei die Rastelemente (50, 131, 132) beim Aufsetzen des Oberteils (O) auf das Unterteil (U) in einer Richtung (K2) senkrecht zur Fügerichtung (F) voneinander wegbewegt werden und in gefügter Position das Unterteil (U) hinter- oder untergreifen.

2. Adapter nach Anspruch 1, **dadurch gekennzeichnet, dass** die Rastelemente (50) beim Aufsetzen des Oberteils (O) auf das Unterteil (U) in einander gegenläufigen Richtungen (R1, R2) senkrecht zur Fügerichtung (F) voneinander wegbewegt werden und in gefügter Position das Unterteil (U) symmetrisch hinter- oder untergreifen

3. Adapter nach Anspruch 1 oder 2, **dadurch gekennzeichnet, dass** jede Schnappvorrichtung (30, 130) einen Schieber (81, 181, 82, 182) umfasst, in oder an dem die Rastelemente (50, 131, 132) angeordnet sind.

4. Adapter nach Anspruch 3, **dadurch gekennzeichnet, dass** die Schieber (81, 82, 181, 182) der Schnappvorrichtungen (30, 130) in einer ersten Richtung (R1) und einer zweiten Richtung (R2), die der ersten Richtung (R1) entgegengesetzt ist, gegenläufig zueinander bewegbar sind.

5. Adapter nach einem der Ansprüche 3 oder 4, **dadurch gekennzeichnet, dass** die Schieber (81, 82, 181, 182) über wenigstens ein Kopplungsglied (70, 133) derart miteinander gekoppelt sind, dass durch eine Bewegung des ersten Schiebers (81, 181) in der ersten Richtung (R1) der zweite Schieber (82, 182) in der zweiten Richtung (R2) und umgekehrt bewegbar ist.

6. Adapter nach einem der Ansprüche 3 bis 5, **dadurch gekennzeichnet, dass** die Rastelemente (50) separat von den Schiebern (81, 82) ausgebildet sind, wobei letztere mit Ausnehmungen (83) versehen sind, in welche die Rastelemente (50) eingesetzt sind.

7. Adapter nach einem der Ansprüche 3 bis 6, **dadurch gekennzeichnet, dass** die Rastelemente (131, 132) mit den Schiebern (181, 182) einstückig ausgebildet sind.

8. Adapter nach einem der Ansprüche 1 bis 7, **dadurch gekennzeichnet, dass** die Schnappvorrichtungen (30, 130) mit einer permanenten Kraft beaufschlagt sind.

9. Adapter nach Anspruche 8, **dadurch gekennzeichnet, dass** die permanente Kraft die Schnappvorrichtungen (30, 130) in einer Rastposition hält, in der die Rastvorsprünge (54, 154) das Unterteil (U) im eingesetzten Zustand hintergreifen.

10. Adapter nach einem der Ansprüche 1 bis 9, **dadurch gekennzeichnet, dass** die Bewegung der Schnappvorrichtungen (30, 130) mit einem Bolzen blockierbar ist.

11. Adapter nach einem der Ansprüche 8 bis 10, **dadurch gekennzeichnet, dass** die kraftbelastete Schnappvorrichtungen (30, 130), das Kopplungsglied (70, 133) einen Schnappmechanismus bilden.

12. Adapter nach Anspruch 11, **dadurch gekennzeichnet, dass** der Schnappmechanismus in einem geschlossenen oder verschließbaren Gehäuse (11) angeordnet ist.

13. Adapter nach einem der Ansprüche 1 bis 12, **dadurch gekennzeichnet, dass** der Adapter (10) eine Verdrehsicherung (17, 41) aufweist, die das Verdrehen des Oberteils (O) gegenüber dem Unterteil (U) verhindert.

14. Adapter nach Anspruch 13, **dadurch gekennzeichnet, dass** die Verdrehsicherung (17, 41) aus einer am Unterteil (U) oder am Oberteil (O) ausgebildeten Ausnehmung (41) und einem am Oberteil (O) oder am Unterteil (U) ausgebildeter Vorsprung (17) besteht, wobei der Vorsprung (17) im montierten Zustand in die Ausnehmung (41) eingreift.

15. Adapter nach einem der Ansprüche 1 bis 14, **dadurch gekennzeichnet, dass** das Unterteil (U) einen Rastrand (40) aufweist.

## Claims

1. Adaptor (10) for attaching objects to the tank (T) of a motorcycle, consisting of a lower part (U) which can be connected to the tank (T) of the motorcycle and an upper part (0) which can be coupled with the object to be attached, the upper part (0) and the lower part (U) are detachably joined together and/or joined inside each other and can be secured in the joined position, the upper part (0) has a snapping device (30, 130) which, in the joined position, is engaged with the lower part (U), **characterized in that** in the upper part (0) two snapping devices (30, 130) are formed which are arranged opposite each other and can be moved in opposite directions to each other, each snapping device (30, 130) has at least one catch element (50, 131, 132), whereby when attaching the upper part (0) onto the lower part (U) in a direction (K2) perpendicular to the joining direction (F), the catch elements (50, 131, 132) are moved away from each other and, in the joined position, engage the lower part (U) behind or below.

2. Adaptor according to claim 1, **characterized in that** when attaching the upper part (0) onto the lower part (U), the catch elements (50) are moved away from each other in opposite directions (R1, R2) perpendicular to the joining direction (F) and, in the joined position, symmetrically engage the lower part (U) behind or below.

3. Adaptor according to claim 1 or claim 2, **characterized in that** each snapping device (30, 130) comprises a slider (81, 181, 82, 182), in or on which the catch elements (50, 131, 132) are arranged.

4. Adaptor according to claim 3, **characterized in that** the sliders (81, 82, 181, 182) of the snapping devices (30, 130) can be moved in opposite directions to each other in a first direction (R1) and a second direction (R2) opposed to the first direction (R2).

5. Adaptor according to claim 3 or claim 4, **characterized in that** the sliders (81, 82, 181, 182) are coupled together by at least one coupling member (70, 133) in such a manner that by a movement of the first slider (81, 181) in the first direction (R1), the second slider (82, 182) can be moved in the second direction (R2) and vice versa.

6. Adaptor according to any one of the claims 3 to 5, **characterized in that** the catch elements (50) are formed separately from the sliders (81, 82), the latter are provided with recesses (83) into which the catch elements (50) are inserted.

7. Adaptor according to any one of the claims 3 to 6, **characterized in that** the catch elements (131, 132) are formed integrally with the sliders (181, 182).

8. Adaptor according to any one of the claims 1 to 7, **characterized in that** the snapping devices (30, 130) are loaded with a permanent force.

9. Adaptor according to claim 8, **characterized in that** the permanent force holds the snapping devices (30, 130) in a catch position in which the catch projections (54, 154) engage behind the lower part (U) in the inserted state.

10. Adaptor according to any one of the preceding claims 1 to 9, **characterized in that** the movement of the snapping devices (30, 130) can be blocked by means of a pin.

11. Adaptor according to any one of the claims 8 to 10, **characterized in that** the force-loaded snapping devices (30, 130) and the coupling members (70, 133) form a snapping mechanism.

12. Adaptor according to claim 11, **characterized in that** the snapping mechanism is arranged in a closed or closable housing (11).

13. Adaptor according to any one of the claims 1 to 12, **characterized in that** the adaptor (10) has an anti-twist protection (17, 41) preventing the upper part (0) from twisting relative to the lower part (U).

14. Adaptor according to claim 13, **characterized in that** the anti-twist protection (17, 41) consists of a recess (41) formed on the lower part (U) or on the upper part (0) and of a projection (17) formed on the upper part (0) or on the lower part (U), whereby in the assembled state, the projection (17) engages in the recess (41).

15. Adaptor according to any one of the claims 1 to 14, **characterized in that** the lower part (U) has a catch edge (40).

## Revendications

1. Adaptateur (10) pour la fixation d'objets sur le réservoir (T) d'une motocyclette, constitué d'une partie inférieure (U) apte à être reliée au réservoir (T) de la motocyclette, et d'une partie supérieure (0) apte à être accouplée à l'objet à fixer, dans lequel la partie supérieure (0) et la partie inférieure (U) peuvent être raccordées l'une à l'autre et/ou l'une dans l'autre de façon détachable, puis bloquées dans la position raccordée, dans lequel la partie supérieure (0) comporte un dispositif d'enclenchement (30, 130) en prise avec la partie inférieure (U) dans la position raccordée, **caractérisé en ce que** deux dispositifs d'enclenchement (30, 130) opposés et mobiles en sens inverse l'un par rapport à l'autre sont formés dans la partie supérieure (0), dans lequel chaque dispositif d'enclenchement (30, 130) comporte au moins un élément d'encliquetage (50, 131, 132), les éléments d'encliquetage (50, 131, 132) étant déplacés les uns à distance des autres dans une direction (K2) verticale à la direction de raccordement (F), lors du montage de la partie supérieure (0) sur la partie inférieure (U), et venant s'engager en prise derrière ou sous la partie inférieure (U) dans la position raccordée.

2. Adaptateur selon la revendication 1, **caractérisé en ce que** les éléments d'encliquetage (50) sont déplacés les uns à distance des autres dans des directions (R1, R2) inverses l'une à l'autre, verticalement à la direction de raccordement (F), lors du montage de la partie supérieure (0) sur la partie inférieure (U), et viennent s'engager symétriquement en prise derrière ou sous la partie inférieure (U) dans la position raccordée.

3. Adaptateur selon la revendication 1 ou 2, **caractérisé en ce que** chaque dispositif d'enclenchement (30, 130) comprend un poussoir (81, 181, 82, 182), dans lequel ou sur lequel sont montés les éléments d'encliquetage (50, 131, 132).

4. Adaptateur selon la revendication 3, **caractérisé en ce que** les poussoirs (81, 82, 181, 182) des dispositifs d'enclenchement (30, 130) peuvent être déplacés en sens inverse les uns par rapport aux autres, dans une première direction (R1) et dans une deuxième direction (R2) opposée à la première direction (R1).

5. Adaptateur selon l'une des revendications 3 ou 4, **caractérisé en ce que** les poussoirs (81, 82, 181, 182) sont accouplés de telle manière entre eux par un organe d'accouplement (70, 133), qu'un mouvement du premier poussoir (81, 181) dans la première direction (R1) permet de déplacer le deuxième poussoir (82, 182) dans la deuxième direction (R2) et inversement.

6. Adaptateur selon l'une des revendications 3 à 5, **caractérisé en ce que** les éléments d'encliquetage (50) sont formés séparément des poussoirs (81, 82), ces derniers étant pourvus d'évidements (83) dans lesquels sont insérés les éléments d'encliquetage (50).

7. Adaptateur selon l'une des revendications 3 à 6, **caractérisé en ce que** les éléments d'encliquetage (131, 132) sont formés en une seule pièce avec les poussoirs (181, 182).

8. Adaptateur selon l'une des revendications 1 à 7, **caractérisé en ce que** les dispositifs d'enclenchement (30, 130) sont soumis à une force permanente.

9. Adaptateur selon la revendication 8, **caractérisé en ce que** la force permanente maintient les dispositifs d'enclenchement (30, 130) dans une position d'encliquetage, dans laquelle les saillies d'encliquetage (54, 154) viennent s'engager en prise derrière la partie inférieure (U) dans la position raccordée.

10. Adaptateur selon l'une des revendications 1 à 9, **caractérisé en ce que** le mouvement des dispositifs d'enclenchement (30, 130) peut être bloqué à l'aide d'un boulon.

11. Adaptateur selon l'une des revendications 8 à 10, **caractérisé en ce que** les dispositifs d'enclenchement soumis à la force et l'organe d'accouplement (70, 133) forment un mécanisme à enclenchement.

12. Adaptateur selon la revendication 11, **caractérisé en ce que** le mécanisme à enclenchement est monté dans un boîtier (11) fermé ou apte à être fermé.

13. Adaptateur selon l'une des revendications 1 à 12, **caractérisé en ce que** l'adaptateur (10) comporte un moyen de blocage en rotation (17, 41) empêchant une rotation de la partie supérieure (0) par rapport à la partie inférieure (U).

14. Adaptateur selon la revendication 13, **caractérisé en ce que** le moyen de blocage en rotation (17, 41) est constitué d'un évidement (41) formé sur la partie inférieure (U) ou sur la partie supérieure (0), et d'une saillie (17) formée sur la partie supérieure (0) ou sur la partie inférieure (U), la saillie (17) s'engageant dans l'évidement (41) dans l'état monté.

15. Adaptateur selon l'une des revendications 1 à 14, **caractérisé en ce que** la partie inférieure (U) comporte un bord d'encliquetage (40).
